Europäisches Patentamt

European Patent Office

Office européen des brevets

(19)

(11) **EP 1 467 362 A1**

(12) **EUROPEAN PATENT APPLICATION**
published in accordance with Art. 158(3) EPC

(43) Date of publication:
**13.10.2004 Bulletin 2004/42**

(51) Int Cl.⁷: **G11B 11/105**

(21) Application number: **03701057.6**

(22) Date of filing: **10.01.2003**

(86) International application number:
**PCT/JP2003/000145**

(87) International publication number:
**WO 2003/060899 (24.07.2003 Gazette 2003/30)**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: **11.01.2002 WOPCT/JP02/00158**

(71) Applicant: **FUJITSU LIMITED**
**Kawasaki-shi, Kanagawa 211-8588 (JP)**

(72) Inventors:
• **Aoyama, Nobuhide**
**Kawasaki-shi, Kanagawa 211-8588 (JP)**

• **Akiyama, Ryota**
**Kawasaki-shi, Kanagawa 211-8588 (JP)**
• **Morimoto, Yasuaki**
**Kawasaki-shi, Kanagawa 211-8588 (JP)**
• **Hosokawa, Tetsuo, Yamagata Fujitsu Limited**
**Higashine-shi, Yamagata 999-3701 (JP)**

(74) Representative: **Stebbing, Timothy Charles**
**Haseltine Lake & Co.,**
**Imperial House,**
**15-19 Kingsway**
**London WC2B 6UD (GB)**

(54) **OPTICAL INFORMATION RECORDING MEDIUM**

(57) An optical information recording medium can reproduce stably RAM information during concurrent reading out of ROM-RAM information. The optical information recording medium comprises a substrate having a ROM area where phase pits to be ROM data are formed, and a magneto-optical recording film for recording RAM data, formed on an area corresponding to the ROM area of the substrate and, in the ROM area, the degree of modulation in the user area is at least 10-37% and, preferably, the degree of modulation of the phase pits in the user area is 15-25%. As an aspect, the optical depth 'of the phase pits is approximately $\lambda/8$-$\lambda/10$ ($\lambda$ is the wavelength of the laser used for recording/reproducing).

## FIG. 5

OMM          PP

EP 1 467 362 A1

# Description

## BACKGROUND OF THE INVENTION

## TECHNICAL FIELD OF THE INVENTION

The present invention relates to an optical information record medium. More particularly, the invention relates to an optical information record medium capable of ROM-RAM concurrent reproduction.

## PRIOR ART

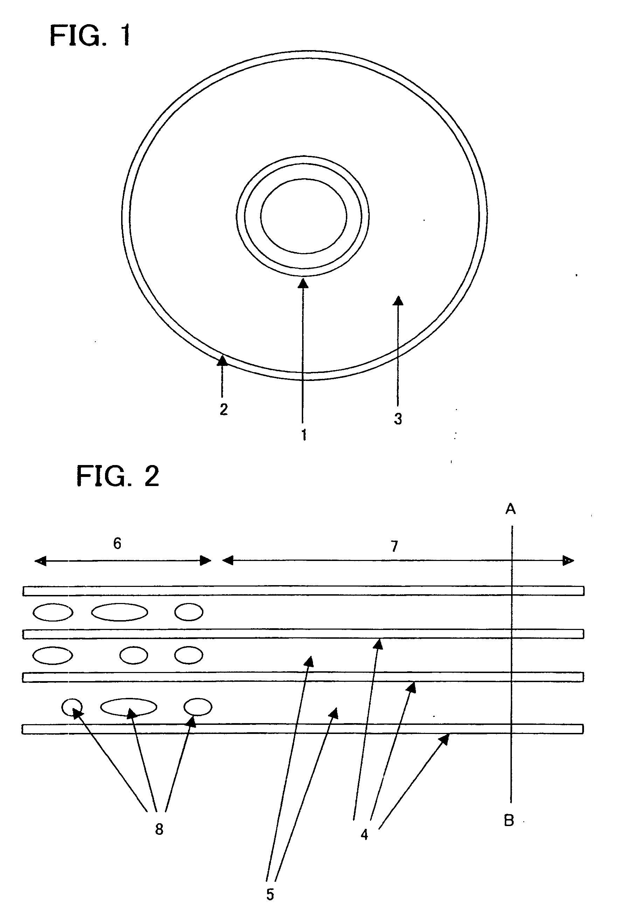

Today, research and development are being actively advanced in terms of high-density recording/reproducing and high-speed accessing for magneto-optical disk memory. Fig. 1 shows a recording medium conforming with the ISO standard and, more specifically, a plan view of a magneto-optical disk as an example. A read-in 1 and a read-out 2 provide ROM information consisting of phase pits according to a principle that pits and projections formed on a polycarbonate substrate are reflected using a reflection film, and information such as specifications of the disk is recorded in them. An apparatus controls conditions for recording/reproducing by reading the information.

The optical depth (pit depth) of the phase pit providing this ROM information is set such that beam intensity modulation during reproduction is maximized. Generally, the depth is set such that the degree of modulation (i.e. the ratio of variation of the beam intensity at a phase pit potion to the beam intensity of a flat portion on which no groove, pit or projection is formed) is 70% or above.

Between the read-in 1 and the read-out 2, there is a user area 3 where a magneto-optical recording film is formed by a sputtering apparatus. A user can record freely information in the user area 3.

Fig. 2 shows a portion of an enlarged plan view of the user area 3. Each land 5 sandwiched respectively by grooves 4 to be tracking guides has phase pits 8 constituting a header portion 6 and a user data portion 7. Information on the header portion 6 consists of a sector mark, a VFO, an ID, etc. according to a sector format.

The user data portion 7 consists of the plane lands 5 and each sandwiched respectively by grooves 4, and records a magneto-optical signal. Recording of a magneto-optical signal is executed by supporting the magnetization inversion using heating by a laser beam on the magneto-optical recording film, inverting the direction of magnetization in response to signals.

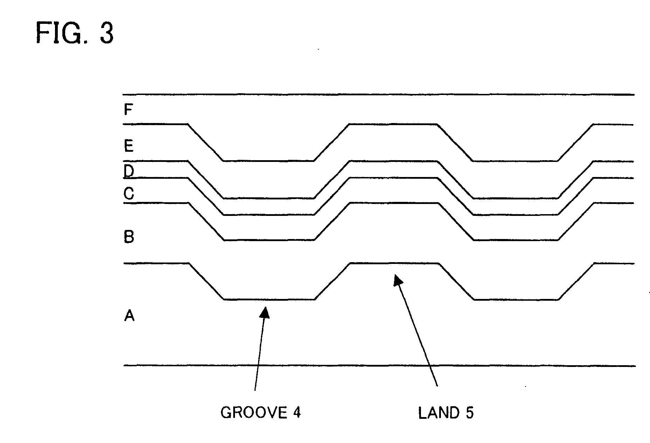

Fig. 3 shows a conceptual structure of a cross-section of the user area along the direction of a radius, i.e., along the line A-B in Fig. 2. The user area is constituted by stacking a substrate A made from polycarbonate etc., a dielectric film B, a magneto-optical recording film C made from TbFeCo etc., a dielectric film D, an Al film E and a UV-cured film F as a protecting layer.

Fig. 3 is prepared by amending Fig. 2, according to a recent magneto-optical disk. That is, in Fig. 3, in order to execute magneto-optical recording also in area of the grooves 4, the groove is shown to have a same width as the width of the area of the land 5 in the direction of the radius.

When recorded information is read out, when a weak laser beam is radiated, the orientation of the polarization plane of the laser beam is varied in response to the direction of magnetization of the recording layer under polar Kerr effect, and whether data exist or not is determined from whether the polarized component of a reflected beam at this time is strong or weak. Thereby, reading out of RAM information is possible.

Research and development for utilizing such characteristics of the magneto-optical disk memory are advanced. For example, the Japanese Patent Application Laid-Open Publication No. 1994-202820 and a report in the Journal of the Television Society, vol. 46, No. 10, pp. 1319-1324 (1992) disclose a concurrent ROM (Read Only Memory)-RAM (Random Access Memory) optical disk capable of being reproduced concurrently (hereinafter, referred to as "optical information recording medium").

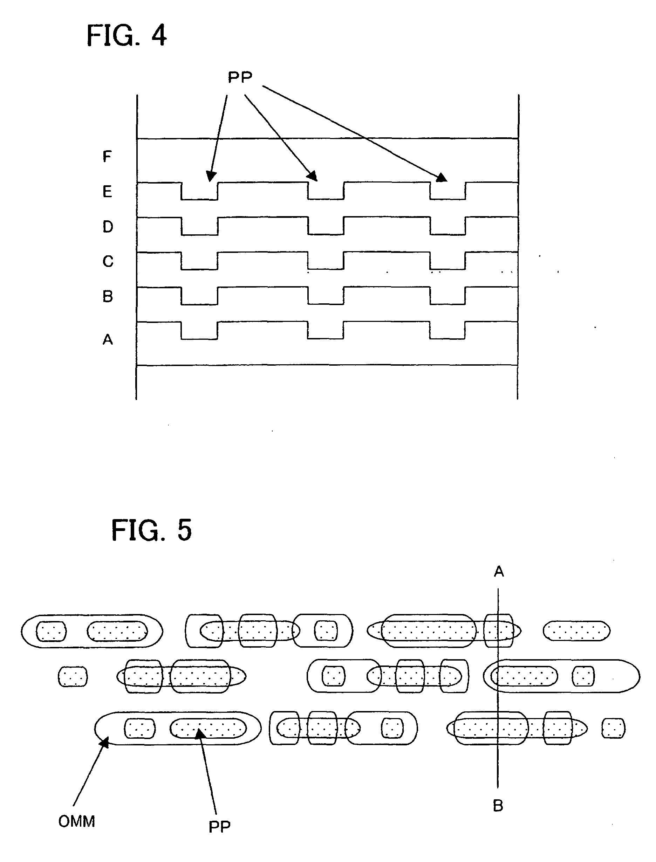

Such an optical information recording ROM-RAMmedium capable of being reproduced concurrently has a cross-sectional structure along the direction of the radius shown in Fig. 4 and is constituted, as an example, by stacking the substrate A made from polycarbonate etc. , the dielectric film B, the magneto-optical recording film C made from TbFeCo etc., the dielectric film D, the Al film E and the UV-cured film F as a protecting layer.

In the optical information recording medium having such a structure, as shown in Fig. 5, ROM information is recorded fixedly by phase pits PP and RAM information is recorded on rows of the phase pits PP with magneto-optical recording OMM. A cross-section along the A-B line in the direction of the radius in Fig. 5 coincides with the view of Fig. 4.

In an example shown in Fig. 5, grooves shown in Fig. 2 and Fig. 3 are not provided since the rows of phase pit PP are tracking guides in this case.

For such an optical information recording medium having the ROM information and the RAM information on the same recording surface, there are many problems for reproducing concurrently the ROM (for reading out only) information consisting of the phase pits PP and the RAM (writable/rewritable) information consisting of Optical Magnetic Memory (OMM). First, in order to reproduce the RAM information stably with the ROM information, it is necessary to reduce the optical intensity modulation occurring when the ROM information is being read out.

Thus, in the above conventional technique, an optical intensity modulation signal of ROM information read-out is reduced by negative feedback to a driving laser (hereinafter, referred to as "MPF [Modulated Power Feedback]).

However, when the degree of the optical intensity modulation is high, the above conventional technique is not satisfactory. That is, the reproducing margin is also reduced if the optical intensity modulation is reduced too much.

Here, there is an example of the conventional technique relating to the magneto-optical recording described in the Japanese Patent Application Laid-Open Publication No. 1986-60147. According to the technique, a magneto-optical disk for recording/reproducing using magneto-optical recording has a spiral groove. For such a structure, the presence or absence of portions of the continuous spiral groove expresses the addresses. Therefore, it is not easy to form a substrate because it is necessary to form a continuous groove stably and to remove the groove partially.

In addition, there is a technique described in the Japanese Patent Application Laid-Open Publication No. 1982-147139. This technology has guiding grooves, optical record disk with uniform coating of recording material, and an apparatus recording and reproducing main information on the address information part. Such an apparatus has a constitution in which, especially for separating the main information and the recorded information, each of them is recorded respectively in different frequencies and bands. Therefore, the influence of the recording frequency etc. in separation of 2 signals cannot be avoidable because the main and address information is separated with the frequency bands.

Furthermore, there is a technique described in the Japanese Patent Application Laid-Open Publication No. 1988-55777. The technique on optical information recording media with a data recording part and a auxiliary data recording part shows us means of reproducing the auxiliary data parts, selecting plural modulation schemes, recording with the selected modulation scheme. According to the technique, the auxiliary data portion is simply separated from the main data portion in terms of area, and the technique does not suggest the effect such as improvement of security obtained by multiplexed record of ROM and RAM information and by reproduction of both ROM and ROM information.

Furthermore, there is a technique described in the Japanese Patent Application Laid-Open Publication No. 1999-283358. According to this technique, in an optical disk, a non-rewritable embossed data part and a rewritable data part on an optical disk are provided respectively in a read-in portion and a read-out portion. Switching of a data area between rewritable and non-rewritable is determined from information in the rewritable area in the read-in or the read-out. Thus, this technique does not suggest improvement of security because rewriting of a user is not basically prohibited.

SUMMARY OF THE INVENTION

In view of the above conventional techniques, the inventors actively had discussions and reached recognition that there is an optimal value for reduction of the optical intensity modulation in reading out of the ROM information.

Based on the above recognition, the object of the invention, therefore, is to provide an optical information record medium capable of reproducing stably RAM information in concurrent reading out of ROM-RAM information.

Another object of the invention is to provide an optical information record medium capable of reducing polarization noises generated by phase pit edges of ROM information in concurrent reading out of ROM-RAM information.

Yet another object of the invention is to provide an optical information record medium applicable to various uses with a structure capable of the above concurrent reading out of ROM-RAM information.

The first aspect of an optical information record medium according to the present invention to achieve the above objects is characterized as by comprising a substrate having a ROM area in which phase pits to be ROM data are formed; and a magneto-optical recording film for recording RAM data, formed on an area corresponding to the ROM area of the substrate, wherein the degree of modulation of the phase pits is 10-3.7% at least in a user area of the ROM area.

The second aspect of the optical information record medium according to the present invention to achieve the above objects is characterized by that in the first aspect the degree of modulation of the user area further is within the range of 15-25%.

The third aspect of the optical information record medium according to the present invention to achieve the above objects is characterized by that in the first aspect the optical depth of the phase pits is approximately $\lambda/8-\lambda/10$ (where $\lambda$ is the laser wavelength used for recording or reproducing).

The fourth aspect of the optical information record medium according to the present invention to achieve the above objects is characterized by that in the second aspect the pit width of the phase pits is 18-24% of the track pitch width.

The fifth aspect of the optical information record medium according to the present invention to achieve the above objects is characterized by that in the second aspect the optical information record medium has an area for storing only RAM data on the substrate in an area different from the ROM area in which the phase pits to be the ROM data are formed.

The sixth aspect of the optical information record medium according to the present invention to achieve the above objects is characterized by that the area for storing only RAM data is capable of land group recording.

The seventh aspect of the optical information record medium according to the present invention to achieve the above objects is characterized by that in the fifth aspect the substrate has a disk shape and that the magneto-optical recording film for storing only the RAM data is disposed in a concentric or spiral manner with respect to the ROM area and inward or outward of the ROM area.

The eighth aspect of the optical information record medium according to the present invention to achieve the above objects of the invention is characterized by that in the second aspect different recording modulation schemes are used respectively for the ROM data recorded in the ROM area and the RAM data recorded in the magneto-optical information record medium.

The ninth aspect of the optical information record medium according to the present invention to achieve the above objects is characterizedby that in the second aspect a magnetic field modulation scheme is used for recording the RAM data.

The tenth aspect of the optical information record medium according to the present invention to achieve the above objects is characterizedby that in the first aspect a guide groove is engraved on the substrate and that the amount of detected light from the phase pits is 70% or more of the level of the detected light only from the guide groove.

The eleventh aspect of an optical information record medium according to the present invention to achieve the above objects is characterized by comprising a substrate having a ROM area in which phase pits to be ROM data are formed; and a magneto-optical recording film for recording RAM data, formed on the ROM area of the substrate, wherein an error correction data generated by combining ROM data and RAM data is recorded as the RAM signal on the magneto-optical recording film.

The twelfth aspect of an optical information record medium according to the present invention to achieve the above objects is characterized by comprising a substrate having a ROM area in which phase pits to be ROM data are formed; and a magneto-optical recording film for recording RAM data, formed on an area corresponding to the ROM area of the substrate, wherein writing is prohibited by a user on a portion of the magneto-optical recording film for storing the RAM data.

The thirteenth aspect of the optical information record medium according to the present invention to achieve the above objects is characterized by that in the second aspect the address number of a writing-in block of the magneto-optical recording film for storing the RAM data coincides with or has certain correspondence to the block address number of the ROM portion.

The fourteenth aspect of the optical information record medium according to the present invention to achieve the above objects is characterized by that in the second aspect unit data information is divided into ROM data and RAM data, each of which is respectively recorded on the ROM area and the magneto-optical recording film.

The fifteenth aspect of an optical information record medium according to the present invention to achieve the above objects is characterized by an optical information record medium having a disk shape and capable of concurrent ROM/RAM reproduction, comprising a substrate having a ROM area in which phase pits to be ROM data are formed; and a magneto-optical recording film for recording RAM data, formed on the substrate, wherein the repetition phase pits of a single frequency are formed on one (1) or more circumferences of the disk.

The sixteenth aspect of the optical information record medium according to the present invention to achieve the above objects is characterized by that in the fifteenth aspect, on an area of the ROM where the mark length and spacing are recorded repeatedly at a single cycle, a magneto-optical mark of single repetition at a frequency different from that of the ROM is recorded as RAM data, and wherein representing the read-out output level of the magneto-optical mark as c [dB] and the leak output level of the ROM data as d [dB],

$$15 < c\text{-}d < 35.$$

The seventeenth aspect of an optical information recording medium according to the present invention to achieve the above objects is characterized by comprising a substrate having a ROM area in which phase pits to be ROM data are formed; and a magneto-optical recording film for recording RAM data, formed on an area corresponding to the ROM area of the substrate, wherein representing as "e" the reproducing amplitude of a magneto-optical recording signal when magneto-optical recording marks are recorded as RAM data in an area where the marks are recorded in random lengths in the ROM area, and representing as "f" the leak amplitude of the ROM data into the magneto-optical recording signal during reproduction of magneto-optical recording signal when the magneto-optical recording marks are deleted,

$$16 < 100 \times f/e < 34 \ [\%].$$

The eighteenth aspect of the optical information recording medium according to the present invention to achieve the above objects is characterized by that in the sixteenth or seventeenth aspect, the optical depth of the phase pits is approximately $\lambda/8$-$\lambda/14$ and, preferably, $\lambda/9$-$\lambda/13$.

The nineteenth aspect of the optical information record medium according to the present invention to achieve the above objects is characterized by that in the sixteenth or seventeenth aspect the phase pit width is within a range of 18-50% of the beam diameter.

The twentieth aspect of the optical information record medium according to the present invention to achieve the above objects is characterized by that in the sixteenth or seventeenth aspect, at least in a user area, the edge portion of the magneto-optical recording marks to be the RAM data and the phase pit portion to be the ROM data are recorded so as not to overlie each other.

The features of the invention will become more apparent from the embodiments described hereinbelow with reference to the drawings.

BRIEF DESCRIPTION OF THE DRAWINGS

Fig. 1 shows a plan view of an magneto-optical disk as an example of a medium conforming with the ISO standard;

Fig. 2 shows a portion of an enlarged plan view showing a user area 3 of a magneto-optical disk memory shown in Fig. 1;

Fig. 3 shows the cross-sectional structure along the direction of the radius along the A-B line in Fig. 2;

Fig. 4 shows a cross-sectional structure of an optical information record medium capable of concurrent reproducing of ROM-RAM;

Fig. 5 illustrates recording of ROM information and RAM information for the optical information recordmedium having a structure shown in Fig. 4;

Fig. 6 shows the shape of phase pits being the premise for understanding the characteristics of an optical information record medium according to the invention;

Fig. 7 is a graph showing the dependency of the degree of modulation and a tracking error signal (TES) both of which are measured by the inventors, on the pit depth Pd and the pit width Pw;

Fig. 8 is a table showing that the degree of modulation of the phase pits influences the jittering of ROM data and RAM data;

Fig. 9 illustrates the measuring method of the degree of modulation;

Fig. 10 is a graph showing the dependency of measured ROM jittering and RAM jittering on the degree of modulation;

Fig. 11 shows the first measuring method of the amount of leak (cross-talk) from the ROM into a magneto-optical record (MO);

Fig. 12 is a graph showing the relation between jittering and leak (c-d) from the ROM signal into the MO signal, measured with the first measuring method shown in Fig. 11;

Fig. 13 shows the second measuring method of the amount of leak (cross-talk) from the ROM into a magneto-optical record (MO)

Fig. 14 is a graph showing the relation between the jittering and the leak (the amount of cross-talk) from the ROM data into the MO data, measured with the second measuring method shown in Fig. 13;

Fig. 15 shows the values of jittering for the phase pit depth Pd of a sample;

Fig. 16 shows the value of jittering for the ratio of the phase pit width to the beam diameter of the sample;

Fig. 17 is a characteristics graph showing the jittering measured for the amount $\Delta T/T\%$ by which the writing timing of the MO data being the RAM data is shifted relative to the ROM data;

Fig. 18 illustrates the state in which the timing is shifted by 50%, i.e., 0.5T relative to a clock T in relation to Fig. 17;

Fig. 19 shows a cross-sectional view along the tangential direction of the shape of the beam intensity of a detection light beam, and the shape of pits;

Fig. 20 illustrates an approximation equation of the degree of modulation;

Fig. 21 illustrates an approximation equation of a push-pull signal;

Fig. 22 shows a cross-sectional view along the tangential direction of the shape of the beam spot of a detection light beam, and the shape of the pits;

Fig. 23 is a block diagram of the constitution of an embodiment of a storage apparatus for an optical information record medium;

Fig. 24 illustrates a four (4)-way split photo detector 22 and the methods for detecting a focus error (FES) and detecting a track error (TES) based on an output of the detector 22;

Fig. 25 shows an example of the detailed constitution of a main controller 15;

Fig. 26 shows combinations of detection of ROM1, ROM2 and RAM in each mode;

Fig. 27 illustrates the constitutions of an encrypting device 151 and a decrypting device 156, and an example of their processing;

Fig. 28 shows the modulation schemes of the RAM data and the ROM data;

Fig. 29 illustrates a magnetic field modulation scheme in which a semiconductor laser diode LD emits pulse lights according to the invention;

Fig. 30 shows the difference between the shapes of recording marks;

Fig. 31 shows an example of the constitution of a synchronization detection circuit 154 in a main controller 15 for reproducing a clock of the ROM data for synchronization processing;

Fig. 32 shows a comparison of the ROM recording capacity and the RAM recording capacity, as 10 (ten), of the optical information recordmediumof the invention, with the specifications of other disk media;

Fig. 33 shows a plan view of another embodiment of the optical information record medium of the invention compared to a conventional P-ROM medium; and

Fig. 34 shows a comparison of the ROM recording capacity and the RAM recording capacity each as 10 (ten) of the optical information record medium of the invention according to the embodiment shown in Fig. 33, with the specifications of other disk media.

## DESCRIPTION OF THE SPECIFIC EMBODIMENTS

The cross-sectional shape of a disk optical information recording medium according to the invention is the same as shown in Fig. 3 and Fig. 4, and the same as shown in Fig. 5 in terms of recording of the ROM data and the RAM data for the disk.

The embodiment of the optical information record medium according to the invention is constituted by forming a dielectric layer B made from SiN etc. on a disk polycarbonate substrate "A" having a diameter of approximately 30-120mm, then, forming a magneto-optical recording film C made from TbFeCo etc. , a dielectric film D and an Al reflecting film E in this order and, finally, applying an overcoat F made from UV-cured resin. In addition, rows of phase pits PP are formed on the optical information record medium as ROM data.

It is not necessary to form a groove on the magneto-optical recording film C as shown in Fig. 4. However, in order to make the track control more secure for a recording apparatus, it is naturally possible to form grooves as shown in Fig. 2 and to adapt magneto-optical recording to be executed on lands formed between them.

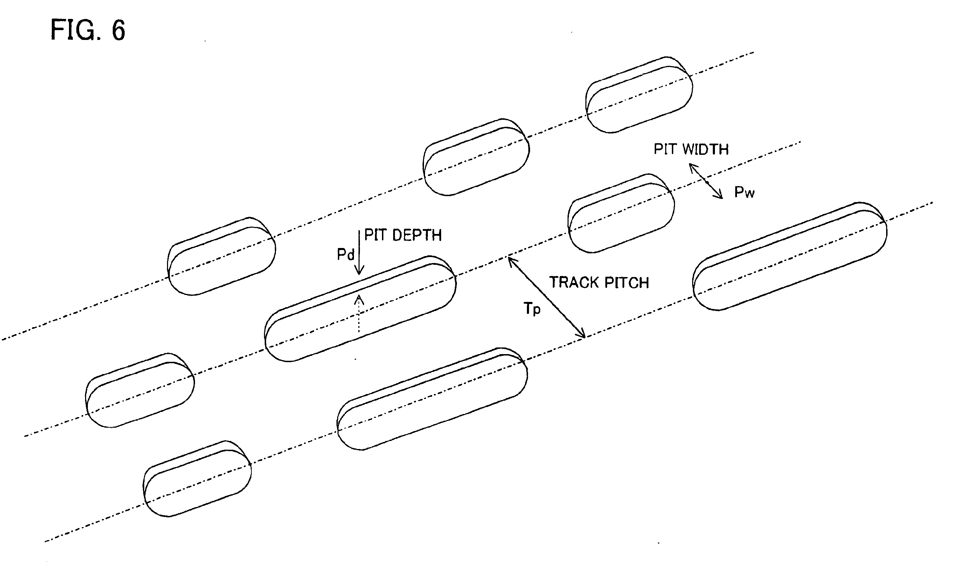

Fig. 6 shows the shape of phase pits being the premise for understanding the characteristics of an optical information record medium according to the invention. In Fig. 6, the reference letters Pd represents the depth i.e., the optical depth of the phase pit. A track pitch Tp represents the spacing between the phase pits and a pit width Pw represents the width of a phase pit in the direction of the radius.

According to further study of the inventors, it has been verified that the degree of optical intensity modulation based on the pit shape and a tracking error signal (TES) have dependence on the pit depth Pd and the pit width Pw.

The structure of a sample used for the above verification is as follows. That is, plural substrates having phase pits of different shapes were formed by injection molding with polycarbonate material to have a thickness of 1.2mm. The structure of layers formed on this substrate was substrate/SiN/TbFeCo/GdFeCo/SiN/Al. The GdFeCo layer was inserted to increase the Kerr rotation angle.

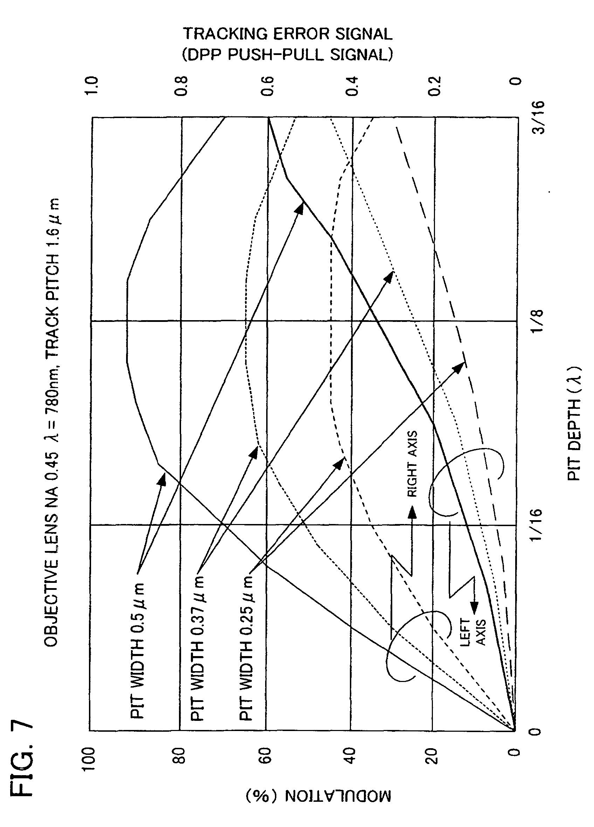

Fig. 7 is a graph showing the dependency of the degree of optical intensity modulation and a tracking error signal (TES) measured by the inventors, on the pit depth Pd and the pit width Pw. The horizontal axis represents the pit depth Pd, i.e., the optical depth when the wavelength of the light for detecting (reading out) of information is assumed to be $\lambda$. The vertical axis on the left represents the magnitude of the degree of optical intensity modulation.

In Fig. 7, the tracking error signal indicated on the vertical axis on the right was obtained with push-pull method described later. Here, the magnitude of a tracking error signal TES after AGC (the output from an automatic gain control circuit) that did not reach within the range of reading error was approximately 0.5 or above.

Therefore, in Fig. 7, the pit depth Pd when the tracking error signal after AGC (referred to the vertical axis on the right) was 0.5 or above was $\lambda/10$-$\lambda/4$ and the pit width Pw was 0.29 or above.

According to various studies and evaluations of the inventors, it has been found that the degree of modulation of the phase pits influences jittering of the ROM signal and the RAM signal. That is, it has been found that there is a problem specific for concurrent ROM-RAM, i.e., there is a problem in the concurrent detection of the ROM signal and the RAM signal. For the case of a scheme in which only the ROM signal or RAM signal is detected, it is enough that the degree of modulation suitable for each of them is considered. It is however, necessary to apply a degree of modulation that is suitable for both of the signal detection for the above case.

A table in Fig.. 8 shows results of measurements obtained under the conditions that the format of the optical information recordmedium is the CD (Compact Disk) format; the minimum mark length 3T is 0.833 $\mu$m, the track pitch is 1.6 $\mu$m, the numerical aperture NAof the objective lens is 0.50 and the wavelength of the laser beam is 785nm.

Here, it is defined as a requirement that, the jittering must be 40ns or less for CD-MO (magneto-optical recording medium) and 30ns or less for CD-WO (writable magneto-optical record medium). Therefore, the block error rate can be suppressed to 3% or less by imposing a requirement for suppressing the jittering to 35ns or less upon the concurrent ROM-RAM magneto-optical record medium of the invention having both of the function.

That is, the jittering ratio of "clock to data" for the window width, i.e., the clock cycle (T=231ns) is represented as $\sigma/(T\sqrt{2})\cdot 100$, where $\sigma$ is the jittering for "data to data". When the jittering ratio is 15% or less, it is known as a standard value with which there is generally no problem. In this regard, when jittering of 35ns or less is required to the above concurrent ROM-RAM magneto-optical record medium, the above jittering ratio is obtained to be 10.7%. It is understood that there is practically no problem.

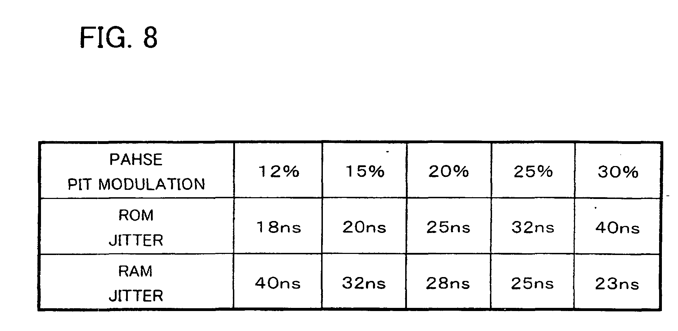

Therefore, it can be evaluated theoretically from the table shown in Fig. 8 that the degree of modulation of a phase pit for which acceptable jittering is 35ns or less is in range of approximately 15-25%. In this case, the detected light amount of the phase pit is 70% or more relative to the detected level for a groove alone.

Based on the above evaluation, referring to Fig. 7, when the range of the pit width Pw is approximately 0.25-0.37$\mu$m and the range of the pit depth Pd

is approximately $\lambda$/10- $\lambda$/8, the degree of modulation of the phase pit (refer to the vertical axis on the left) is obtained in the range of 15-25%.

Therefore, considering as values necessary for the characteristics and mass-productivity of apparatuses and media, it can be understood that the pit depth Pd is approximately $\lambda$/10- $\lambda$/8 and the pit width PW is in a range of 18-24% of the track pitch width, that satisfy the both of the conditions of that the tracking error signal after AGC should be 0.5 or more and that the degree of modulation of the phase pit is in a range of 15-25%.

An embodiment satisfying the above ranges is the one having the groove depth (V-groove) and the pit depth of both $\lambda$/8 and the pit width of 20% of the land width.

By recording the ROM information such that the above conditions for the pit depth Pd and the pit width Pw presented by the invention are satisfied, it is possible to solve the problems which have been not completely solved by the method in which the illumination of a semiconductor laser is negatively feedback-controlled, in the conventional technique for reducing the influence of the optical intensity modulation. in the concurrent reading out of the ROM information and the RAM information previously described.

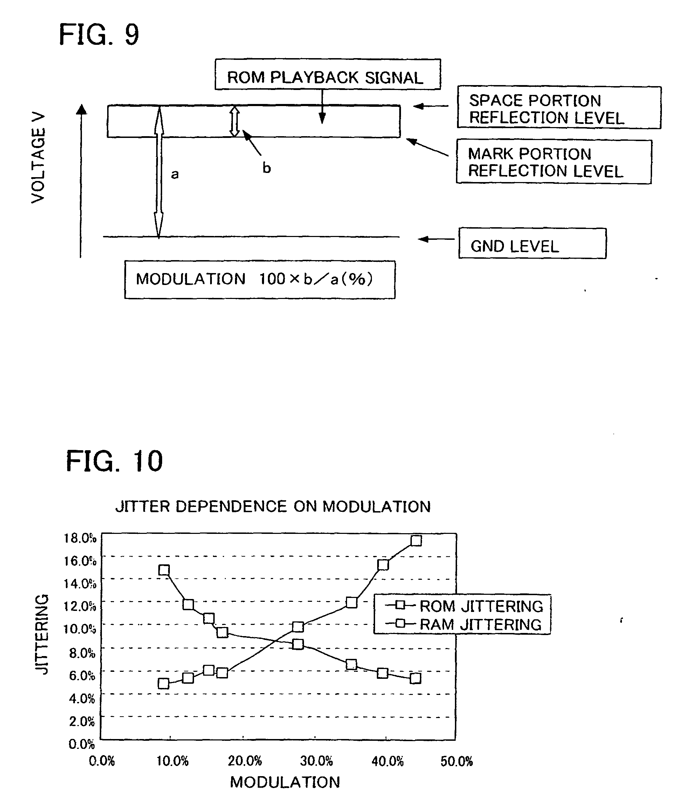

Here, the degree of modulation is obtained in detail using the sample. As the method for measuring the degree of modulation, the sample is set to and rotated on a tester, the PP is tracked and ROM data of phase pits is reproduced. In this case, as shown in Fig. 9, the degree of modulation is defined by the following equation using the ratio the reflection level b on the mark portion to the reflection level a on the space portion of the ROM reproduced signal.

$$\text{Degree of Modulation} = (b/a) \times 100 \, [\%]$$

Based on this definition, the above sample was set on the tester and ROM jittering and RAM jittering were measured.

Fig. 10 is a graph showing the dependency of the ROM j ittering and the RAM jittering on the degree of modulation measured under the following tester conditions, recording conditions and reproducing conditions.

Tester Conditions; Laser wavelength is 650nm; NA is 0.55; Linear velocity is 4.8 [m/s]; Magnetic field recording was used; Shibasoku LM530C was used as the tester.

Recording Conditions; Laser power for recording Pw = 6.5mW; DC illumination was used; EFM random patterns were recorded; The shortest mark was 0.832 μm.

Reproducing conditions : Reproducing power Pr = 1.5mW, No reproducing magnetic field was applied; The orientation of polarization was perpendicular to the track.

It will be understood from the above Fig. 10 that the degree of modulation should be 10-37% in order to obtain a jittering ratio of 15% or smaller that is generally the maximal tolerance. Furthermore, although only the variation during reproducing may be considered for the ROM signal, during not only reproducing but also recording the variation should be considered for the RAM signal. Therefore, it is necessary to take into account various varying factors in practical uses, such as, the variation of recording magnetic field and the variation of recording power, both of which can reduce the amount of jittering. Thereby, for example, when the jittering ratio has to be 10% or smaller, it is preferable for practical uses to set the degree of modulation at 15-25%.

Furthermore, the inventors have found that an amount of leak from the ROM to a magneto-optical recording (MO) influences jittering and the amount has to be kept a certain range to obtain tolerable jittering.

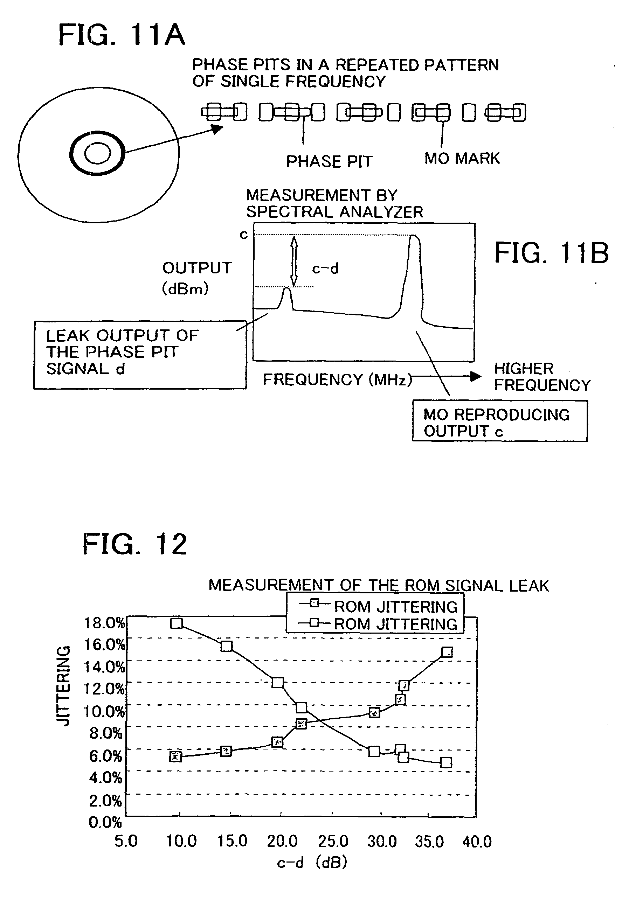

Here, there is a method shown in Fig. 11 as the first measuring method of the amount of leak (cross-talk) from the ROM to the magneto-optical recording (MO). In the method shown in Fig. 11, as shown in Fig. 11A, phase pits of a repeating pattern of single frequency are formed on an area of at least one (1) circumferential length of the optical information recording medium.

For example, on an internal circumference portion, a long phase pit of 11T is formed for at least the length of one (1) track circumference in single repetition. This sample is set on the tester under the above conditions, the phase pits of 11T repetition pattern are tracked and the shortest magneto-optical recording (MO) mark is recorded.

An output of a differential amplifier of a reproducing apparatus described later is inputted into a spectral analyzer. Thereby, an output of the magneto-optical recording (MO) signal and the leak signal output from the phase pits to the MO signal can be separately measured.

An output c on a high frequency side in Fig. 11B is the MO signal output level and a low frequency side is an output level d of the leak from the ROM signal into the MO signal. The difference between the MO signal output and the leak from the ROM signal, c-d is the amount of leak, cross-talk from the ROM signal to the MO signal.

Fig. 12 is a graph showing the relation between the jittering and the leak (c-d) from the ROM signal into the MO signal. For the case of EFM modulation used in this measurement, the shortest mark had a length of 3T. For example, a long phase pit of 11T is formed on the internal circumference portion for the length of at least one (1) circumferential length of the track by single repetition. This sample is set on a tester suitable for the measuring method shown in Fig. 11, the phase pit of a repeated pattern of 11T long is tracked and the shortest MO mark of a 3T repetition pattern is recorded.

In Fig. 12, it can be understood that the cross-talk (c - d) should be 15-35dB in order to obtain jittering of 15% or less.

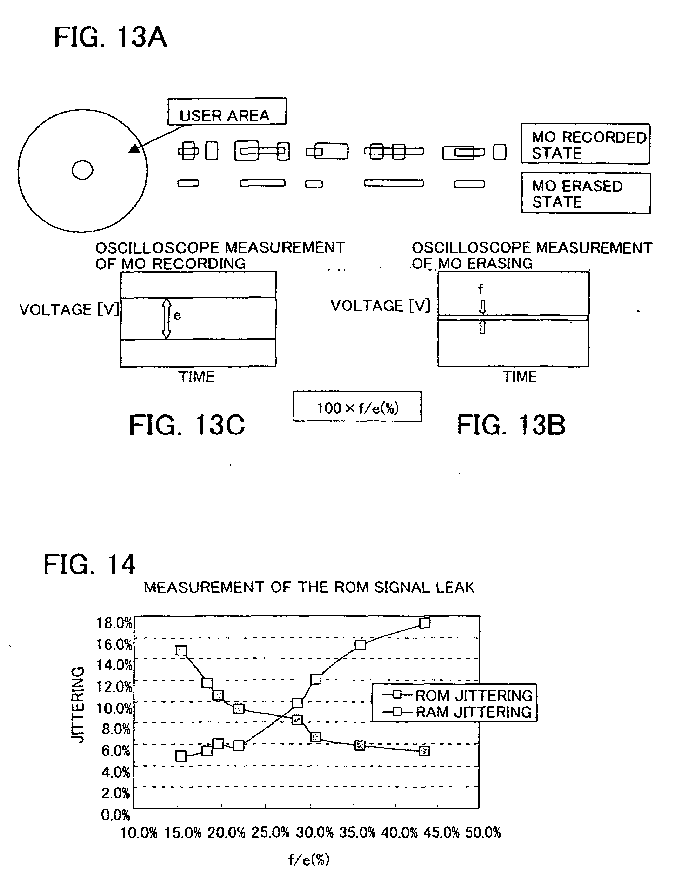

Furthermore, there is a method shown in Fig. 13 as the second method for measuring the amount of leak (cross-talk) from the ROM signal into the magneto-optical recording (MO) signal.

As shown in Fig. 13A, since information of contents is recorded with phase pits as the ROM data in the user area of a recording medium, the lengths of pits are necessarily random. The sample is set on the tester under the above condition and the user area consisting of random patterns is tracked.

Similar to the first measuring method, the output of the differential amplifier is inputted into an oscilloscope and the MO signal is deleted anyway. The amplitude f (Fig. 13B) measured by the oscilloscope at this time is the intensity of the leak signal from the ROM signal into the MO signal caused by the phase pits. Next, The MO signal having a random length is recorded. The amplitude waveform e measured by the oscilloscope when the MO signal shown in Fig. 13C is recorded is the intensity of a signal formed by summing the leak signal and the reproduced MO signal. The percentage obtained in this case, $100 \times f/e$ is the amount of the cross-talk.

Fig. 14 is a graph showing the relation between the jittering and the leak (the amount of cross-talk) from the ROM signal into the MO signal, measured using the second method for measuring the amount of the above leak (cross-talk). In evaluation based on this method, the amount of the cross-talk (f/e) should be 16-34% in order to obtain a jittering ratio of 15% or smaller.

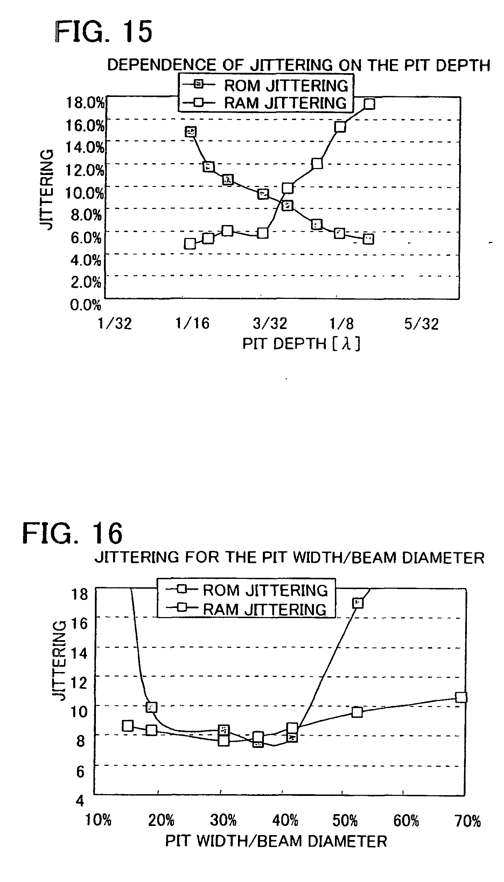

Fig. 15 shows the values of jittering for the phase pit depth Pd of the above sample. Here, the phase pit depth Pd is measured using AFM (Atomic Force Microscope) on the substrate with magneto-optical recording layers. From Fig. 15, the phase pit depth Pd should be approximately 29-51nm in order to obtain jittering ratio of 15% or smaller for both of the ROM and RAM signals. This depth corresponds to $\lambda/14$-$\lambda/8$ by optical conversion. Taking into account further the safety factors as described above (assuming the refractive index of the substrate to be 1.58), the depth of $\lambda/9$-$\lambda/13$ is preferable.

Furthermore, plural samples with a constant phase pit depth Pd of approximately 40nm and with various phase pit widths Pw were prepared. Each of these samples was set on the tester described above and jittering was measured under the same recording and reproducing conditions as before. The beam diameter of the tester in this embodiment was 1.08μm ($1/e^2$). Fig. 16 is a graph showing the measured values of jittering in this embodiment.

From Fig. 16, it can be understood that the ratio of the pit width Pw to the beam diameter should be within a range of approximately 18-50% in order to obtain the jittering ratio of 15% or smaller for both of the ROM and RAM.

Furthermore, as a characteristic of the invention, the inventors has found that the effect of the polarization noise generated by phase pit edges on the ROM information, given when the RAM information is reproduced can be reduced by slightly shifting the timing for recording the RAM information in the case where the RAM information is recorded on the ROM information.

Especially, in the case for mark-edge recording effective for shifting to higher density, the above shifting of the timing is very effective. For example, the shifting of the timing is employed for a CD for which the coding for recording is the mark-edge recording. In the case for EFM (Eight to Fourteen Modulation) in which 8-bit data is converted into 14-bit run-length codes and recorded, representing the data bit length as T, the shortest mark is 3T and the longest mark is 11T. Therefore, when the timing is shifted by an integer times T, there are cases where any of the phase pit edges and the edge of a magneto-optical recording mark coincide with each other because there are 9 (nine) kinds of mark lengths even when they are random.

Therefore, the basic value of the amount by which the timing should be shifted is $0T < \Delta T < 1T$. Taking into account the generality, the timing may be shifted by $nT + \Delta T$ (n is an integer including 0 (zero)) when represented using the above $\Delta T$.

When the signals are reproduced, since the recording positions for the ROM and RAM in formation are slightly shifted from each other, the timings are synchronized by a delay circuit in a reading-out controlling unit of an optical storage apparatus as described later as an embodiment. In practice, even when the head of the block of the ROM information and the block of the RAM information do not synchroni ze with each other, each of them are caused to be stored in a memory as independent block data. The processing after this can be coped with according to the constitution of the system.

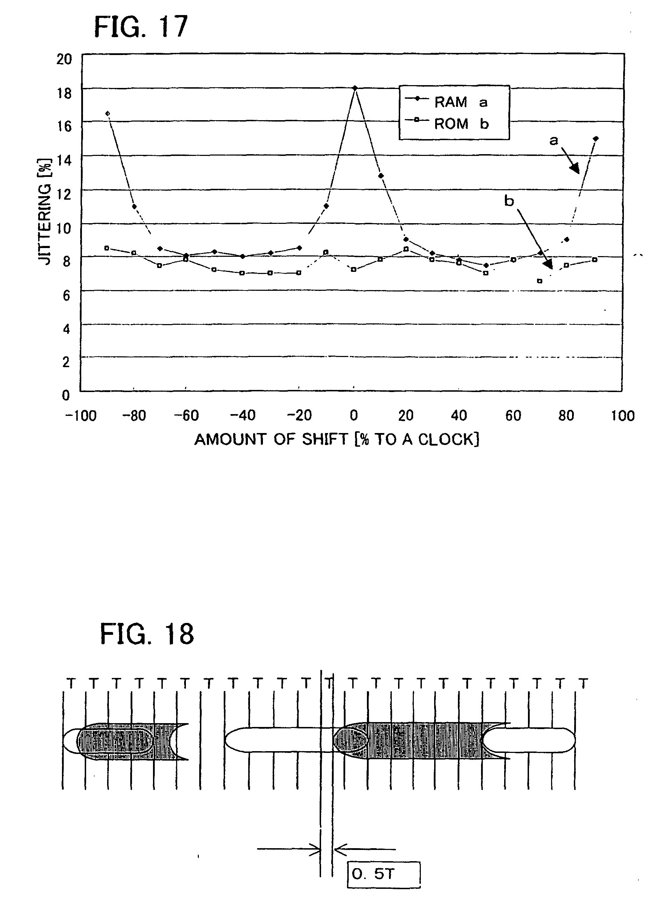

Fig. 17 is a characteristics graph showing the jittering measured for the amount $\Delta T/T\%$ by which the writing timing of the MO signal being the RAM signal is shifted relative to the ROM signal. As shown in Fig. 17, the ROM signal b has a flat characteristic without being influenced by the writing operation of the RAM signal a. On the other hand, the RAM signal a has the maximal jittering value when the amount of shifting is 0 (zero) due to the cross-talk from the ROM signal b. Forcing the ROM signal not to vary when the RAM signal is inverted can reduce this jittering. As shown in Fig. 18, when shifted by 50%, i.e., 0.5T relative to the clock T, it is minimal as can be understood from Fig. 17.

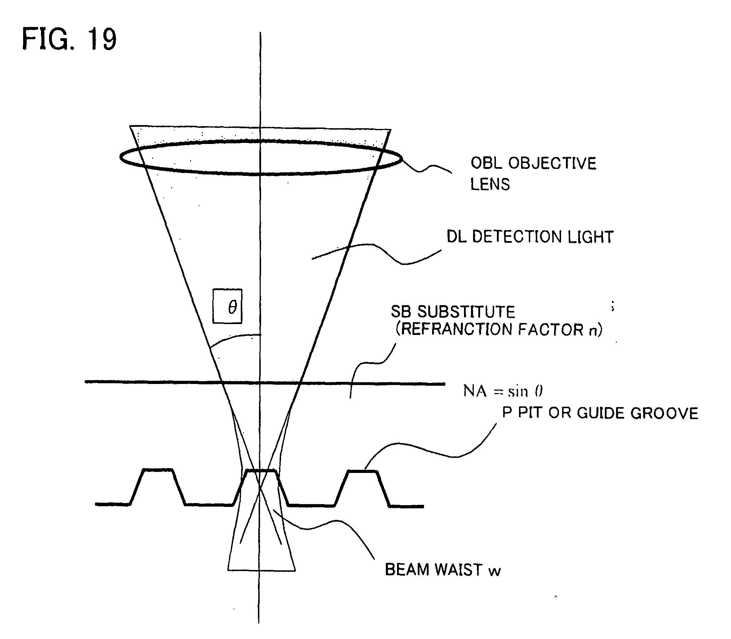

Here, the degree of modulation and the pit shape described above are further considered. In Fig. 19 showing a cross-sectional view along the tangential direction of the shape of the beam intensity of a detection light beam and the shape of pits, a detection system for a disk optical record medium has a spot having a beam waist W represented approximately by the following equation (1) formed on the optical recording medium by the numerical aperture NA of an objective lens OBL and the wavelength λ of the detecting light. The beam waist W has a width of $1/e^2$ of a distance from a position for which the intensity takes the highest value to a position for which the intensity takes a half of the highest value.

$$W = 2\lambda/\pi NA \qquad (1)$$

where NA = *sin* θ

An actual beam waist W somewhat varies due to the optical intensity distribution after passing through the objective lens OBL, and due to the surface precision of optical parts used, etc. Thereby, the degree of modulation and the amount of the tracking error signal are varied due to the pit shape of the optical information record medium defined by the invention.

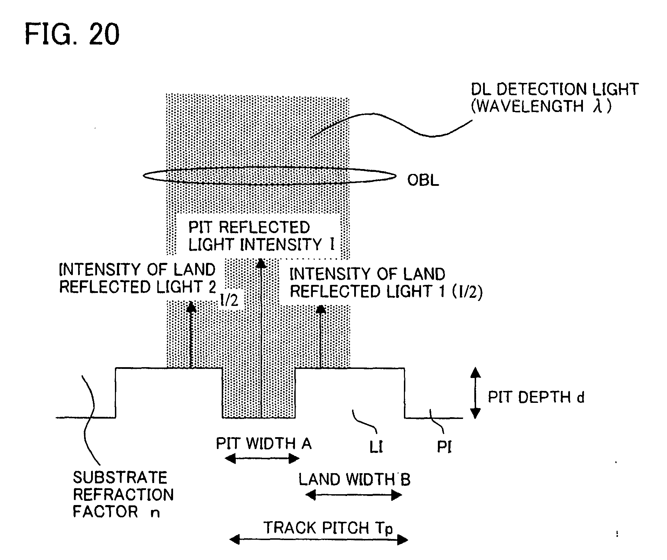

In general, for the pit shape, a relation of the following equation (2) is approximately represented in the arrangement shown in Fig. 20 as to the degree of modulation Im.

$$1 - Im = (A^2 + B^2 + 2ABcos(\Delta))/(A + B)^2 \qquad (2)$$

where $\Delta = 4\pi \, dn/\lambda$, *n* = the refraction index of the substrate SB, A = the pit width and B = the land width.

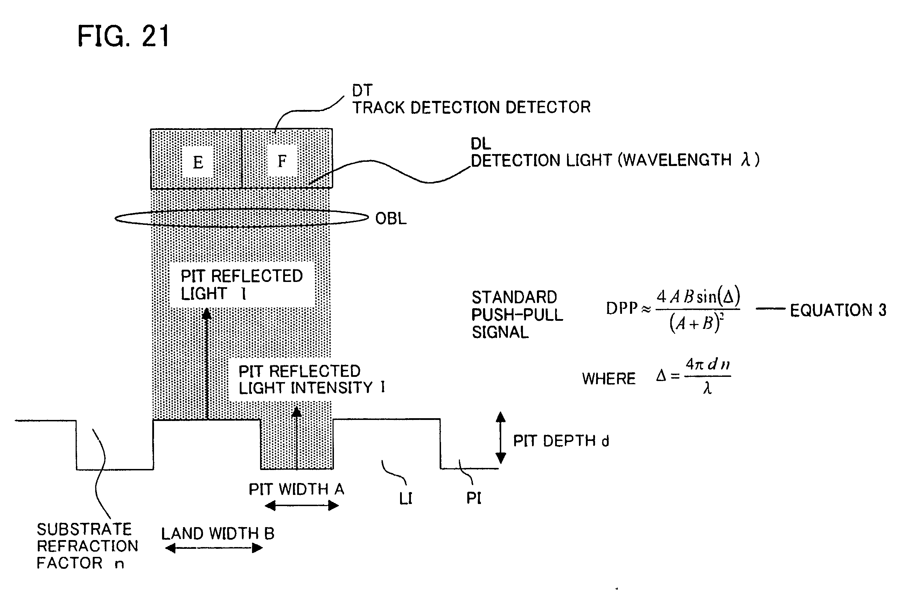

In this case, the equation is considered assuming that the amounts of light reflected by a pit portion PI and by a land portion LI are approximately equal. However, in practice, the amounts of light reflected by the land portion LI and the pit portion PI are different from each other depending on the shape of the beam spot. Furthermore, in general, a tracking signal DPP formed according to the push-pull method, that is normalized for the pit shape is represented approximately by the equation (3) in the arrangement shown in Fig. 21.

$$DPP = 4ABsin \, (\Delta)/(A + B)^2 \qquad (3)$$

where $\Delta = 4\pi \, dn/\lambda$, *n* = the refraction index of the substrate, A = the pit width and B = the land width.

As can be seen from these equations, it can be seen that, in order to increase the degree of modulation, the pit depth d should be taken closer to λ/4, and the ratio of the pit width A to the land width B should be taken closer to 1:1.

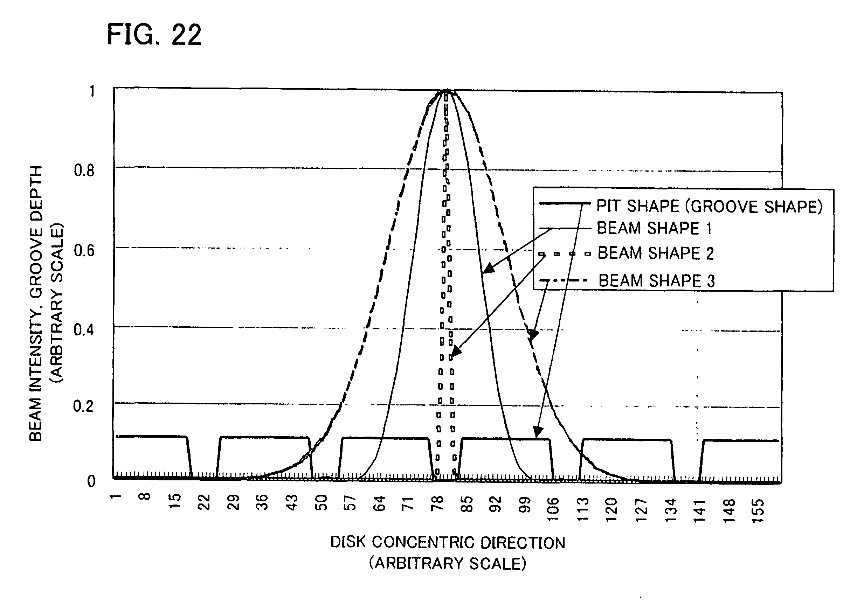

Though only the pit shape is designated, a desired degree of modulation cannot be obtained in practice due to the optical system. Fig. 22 shows the state of the shape of the beam spot according to the difference of the optical system along the radius of concentric circles of the optical information record medium defined in the invention. In the cases of beam shape 2 and beam shape 3, it is obvious that a desired degree of modulation and a desired push-pull signal cannot be obtained.

Beam shape 1 shows a beam spot preferable shape in an optical system in an application of the invention. In a practical optical system, the beam spot shape is almost defined by the intensity distribution of the light source, the numerical aperture of the objective lens and the wavelength of the light, the combination of those for which the diameter of the beam waist W as a reference value becomes equal to the level of the track pitch for recording/reproducing of an optical information recording medium is presented by the invention.

The pit shape is a ratio of the pit width to the track pitch. In applications of the invention, only the pit depth needs to be defined.

Next, the constitution of an embodiment of a storage apparatus for executing recording/reproducing to the above optical information record medium according to the invention will be described as follows.

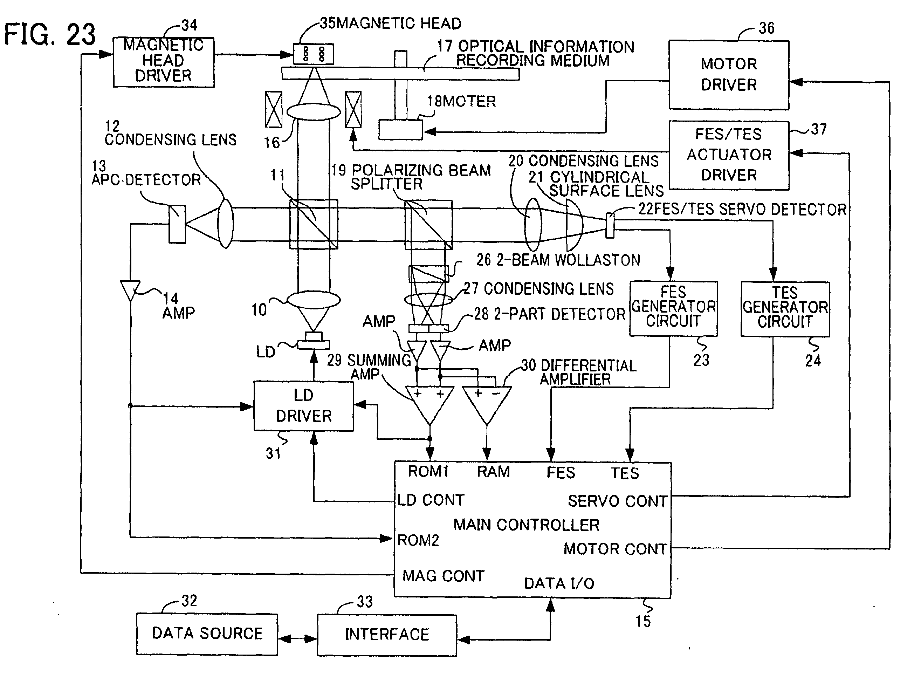

Fig. 23 is a block diagram of the constitution of the embodiment of a storage apparatus for an optical information record medium. In Fig. 23, a laser beam emitted from a light source of a semiconductor laser diode LD (at a wavelength of 785nm) is converted into a parallel beam flux by a collimator lens 10.

Then, the converted beam flux is injected into a polarizing beam splitter 11. Light reflected at the polarizing beam splitter 11 is injected into a photo detector 13 for automatic power control (APC) by a condenser lens 12. In the photo detector 13, the light is photo-electric-converted. Then, a detected electric signal is sent to a main controller 15 through an amplifier 14 and is used for APC control or reproducing of the ROM signal.

On the other hand, the beam flux having passed through the polarizing beam splitter 11 is thinned to approximately the limit of diffraction by an objective lens 16, and illuminates an optical information record medium 17 of the invention. A motor 18 rotates the optical information record medium 17. Furthermore, a beam flux reflected at the optical information record medium 17 is again injected into the polarizing beam splitter 11 through the objective lens 16, is reflected at the polarizing beam splitter 11 and sent to a servo optical system and a recorded information detecting system.

That is, the reflected light beam from the optical information recording medium 17 reflected at the polarizing beam splitter 11 is injected into a second polarizing beam splitter 19, and the light beam transmitted through it is injected into the servo optical system and the light beam reflected at the second beam splitter 19 is injected into the recorded information detecting system.

The transmitted light beam from the secondpolarizing beam splitter 19 is injected into a four (4)-way split photo detector 22 through another condenser lens 20 and a cylindrical lens 21 and is photo-electric-converted in the four (4)-way split photo detector 22.

Focus error detection (FES) is executed to the output of the four (4)-way split photo detector 22 by a generation circuit 23 using the astigmatic method. At the same time, track error detection (TES) is executed by another generation circuit 24 using the push-pull method.

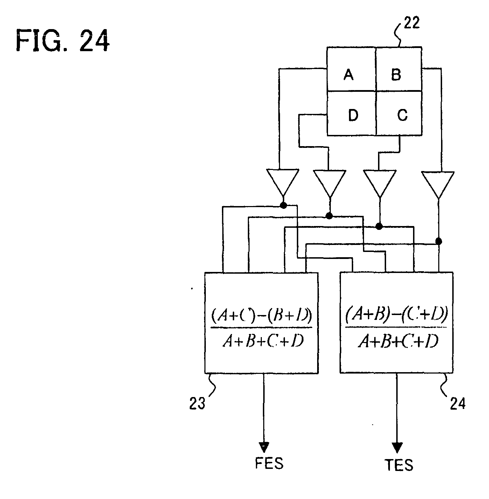

Fig. 24 illustrates the relations between the four (4)-way split photo detector 22, the generation circuit 23 for executing the focus error (FES) detection using the astigmatic method, and the generation circuit 24 for executing the track error (TES) detection using the push-pull method based on the output of the detector 22.

Assuming that transmitted light beams from the second beam splitter 19 having been split into four (4) at the four (4)-way split photo detector 22 are represented respectively by A, B, C and D, the generation circuit 23 for executing the focus error detection (FES) using the astigmatic method obtains a focus error (FES) which is a control error in the optical axis direction of the objective lens 16, according to the following calculation.

$$FES = \{(A + C)\text{-}(B + D)\}/(A + B + C + D)$$

On the other hand, the generation circuit 24 for executing the track error (TES) detection using the push-pull method obtains a track error (TES) which is a control error in a direction perpendicular to the optical axis of the objective lens 16, according to the following calculation.

$$TES = \{(A + B)\text{-}(C + D)\}/(A + B + C + D)$$

The focus error signal (FES) and the track error signal (TES) obtained by these calculations are inputted into a main controller 15.

On the other hand, in the recorded information detecting system, the reflected laser beam is injected into a 2 (two)-beam Wollaston prism 26. The polarization characteristic of the reflected laser beam that changes with the orientation of magnetization of the magneto-optical recording on the optical information record medium 17, is converted into a light intensity.

That is, the reflected laser beam is split into two beams of which polarization orientations are perpendicular to each other, by polarization demodulation at the 2-beam Wollaston prism 26, and the two beams are injected into a two (2) -split photo detector 28 through a condenser lens 27 and photo-electric-converted respectively.

Two electric signals photo-electric-converted by the two (2)-split photo detector 28 are added by an adding amplifier 29 and form a first ROM signal (ROM1) and, concurrently, are subtracted by a subtraction amplifier 30 and form a RAM reading out signal (RAM) , and both of them are inputted into the main controller 15 respectively. Furthermore, the ROM signal (ROM1) is used as a feedback signal for suppressing the optical intensity modulation caused by the phase pits.

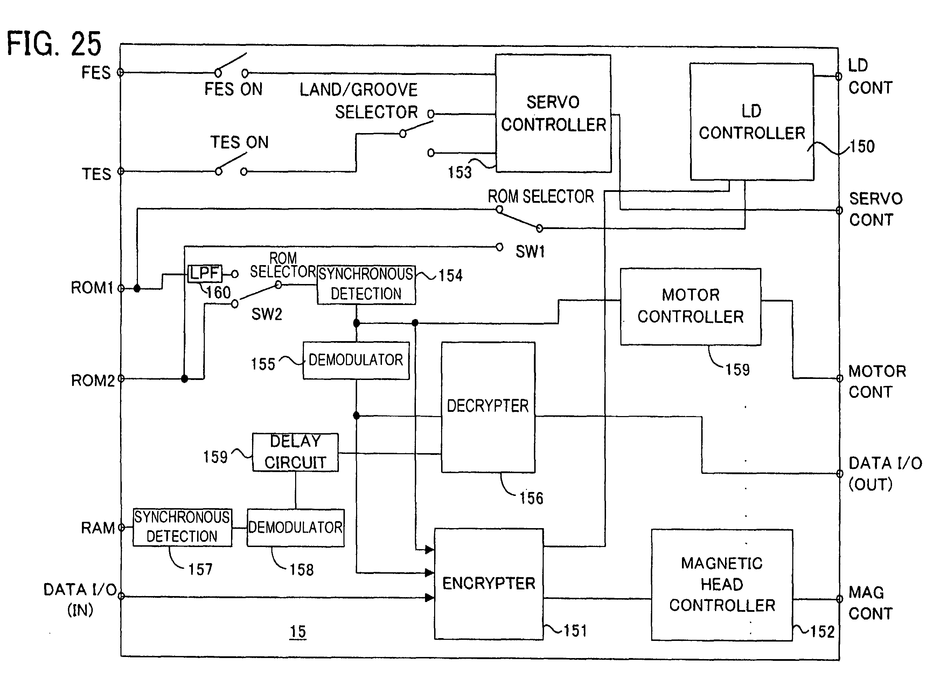

The flow of the beam flush has been mainly described. Next, the flow of output signals from each photo detector will be described referring to an example of the detailed constitution of the main controller 15 shown in Fig. 25.

In Fig. 25, a light beam reflected at the semiconductor laser diode LD and injected into the photo detector 13 for the APC is photo-electric-converted and is inputted the main controller 15 through the amplifier 14 as the second ROM signal (ROM2).

Furthermore, as described above, the first ROM signal (ROM1) being the output of the adding amplifier 29, the RAM signal (RAM) being the output of the differential amplifier 30, the focus error signal (FES) from the FES generation circuit 23, and the track error signal (TES) from the TES generation circuit 24 are inputted into the main controller 15.

Furthermore, data for recording are inputted and read out data are outputted through an interface circuit 33 from/to a data source 32.

The first ROM signal (ROM1), the second ROM signal (ROM2), and the RAM signal (RAM) are detected and used respectively corresponding to each mode, i.e., a mode in which the ROM and the RAM are reproduced, in which only the ROM is reproduced, and in which recording is executed (WRITE).

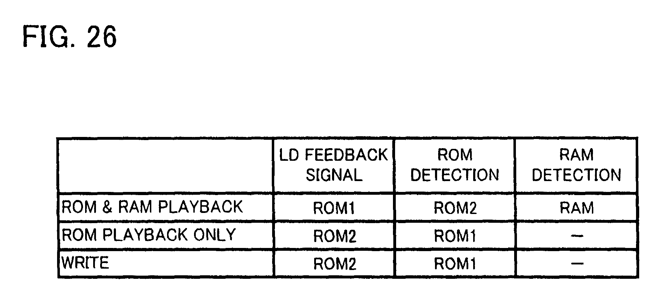

Fig. 26 shows combinations of detection of the ROM1, the ROM2 and the RAM in each mode. The main controller 15 shown in Fig. 25 has ROM switching switches SW1 and SW2 for combining the ROM1, ROM2 and RAM in each mode as above.

The states of the ROM switching switches SW1 and SW2 shown in Fig. 25 is for reproducing the ROM and the RAM in a mode shown in Fig. 26. During ROM reproduction and RAM recording, each of the states of the ROM switching switches SW1 and SW2 is switched into inverted states respectively.

An LD controller 150 in a main controller 15 generates a command signal for an LD driver 31 in response to outputs from an encrypting device 151 and the ROM switch SW1.

According to the command signal generated by the LD controller 150, the LD driver 31 negatively feedback-controls the illumination power of the semiconductor laser diode LD in response to the first ROM signal (ROM1) when the ROM and RAM are reproduced, and negatively feedback-controls the illumination power of the semiconductor laser diode LD in response to the second ROM signal (ROM2) during only ROM reproduction and RAM record.

When magneto-optical recording is executed, data from the data source 32 is inputted into the main controller 15 through the interface 33 (see Fig. 23). In the main controller 15, the inputted data are encrypted by the encrypting device 151 for securing the security and are supplied to a magnetic head driver 34 through a magnetic head controller 152 as data to be recorded.

Here, the main controller 15 is exemplified by a main controller that comprises an MPU, a DSP, an encoder/decoder etc. and is constituted by an integrated LSI capable of supervising and controlling reproducing/ recording process functions, serve function, laser illumination control etc.

In this case, the encrypting device 151 can be constituted such that encryption is executed combining with the ROM signal demodulated by a demodulator 155 when higher security is necessary.

The magnetic head driver 34 drives a magnetic head 35 and modulates the magnetic field in response to the encrypted data to be recorded. At this time, a signal to instruct the time to record is sent from the encrypting device 151 in the main controller 15 to the LD driver 31. Then, in response to the second ROM signal (ROM2), the LD driver 31 negatively feedback-controls the illumination of the semiconductor laser diode LD such that the laser power is optimal for recording.

As for the recording of the ROM signal and the RAM signal, the following aspects are possible for higher security or stable recording/reproducing of data.

That is, error correction signals generated by combining the ROM and RAM signals are recorded to the magneto-optical recording medium as the RAM data.

Otherwise, at least one (1) of the ROM signal and the RAM signal may be encrypted and recorded on a corresponding ROM area or the magneto-optical recording film and, concurrently, the method of decryption for the encryption may be recorded on at least one (1) of the ROM area and the magneto-optical recording film.

Otherwise, writing into at least a portion of the magneto-optical recording film storing the RAM signal may be prohibited by a user. In order to do this, a predetermined identifying ID has been recorded in advance on a portion of the RAM area that the main controller 15 manages not to be included in a rewritable logic sector. Thereby, the identifying ID becomes only to read. Such an identifying ID can be applied variously such that it distinguishes the type and model in personal uses and medical uses.

These aspects can be controlled by firmware in the encrypting device 151.

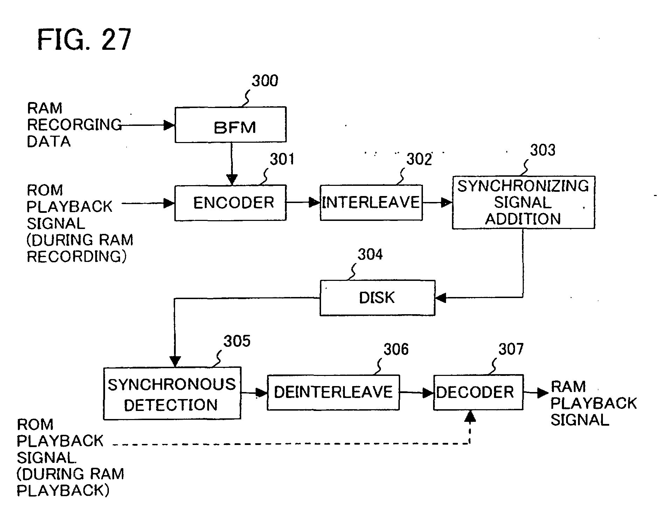

Fig. 27 illustrates the constitutions of the encrypting device 151 and the decrypting device 156, and an example of their processing.

In the encrypting device 151, the digital RAM signal being the RAM recording data to be magneto-optical recorded in inputted into an encoder 301 through a buffer memory 300 together with the ROM signal reproduced by the demodulator 155. In the encoder 301, an encoding process for encrypting the RAM signal utilizing the ROM signal is executed.

There are various methods possible for encrypting the RAM signal utilizing the ROM signal. For example, it is possible to record on a magneto-optical recording film encrypted RAM data formed by mixing equally ROM data considered as an R-channel and RAM data considered as an L-channel like generating a stereo sound. In this case, since the ROM data has been recorded fixedly by a pit phase originally in the land area, it is preferable to mix the two (2) data with a somewhat smaller information amount of the ROM data

Thereby, encryption that is impossible for an ordinary recording medium for a RAM data shown in Fig. 1 can be enabled.

Otherwise, in the encoder 301, simplified encryption is possible by inserting one (1) bit of the ROM signal into every predetermined bits of the RAM signal.

An output of the encoder 301 executes an interleave process in which a serial bit row being the output of the encoder 301 is replaced according to a predetermined rule, in an interleaving circuit 302. This is for securing the randomness of the signs.

Then, by synchronization/conversion circuit 303, it is synchronized with a clock signal reproduced from the ROM signal and converted into a NRZI signal to form an RAM recording information.

As described later, this RAM recording information is recorded superimposing on and corresponding to a ROM storage area fixedly recorded by pit phase on the land area of the magneto-optical recording medium.

The RAM signal read out from the magneto-optical recording medium to be inputted into the decrypting device 156 is processed by a synchronization detection and demodulation circuit 305, a deinterleave circuit 306 and a decoder 307 respectively oppositely to the processes executed by synchronization and conversion circuit 303, a interleave circuit 302 and an encoder 301 in the encrypting device 151, and decrypted RAM signal can be obtained.

According to the above constitution, it is possible to combine the ROM and the RAM even in error correction. For example, in Fig. 27, as indicated by dotted arrows, error correction is executed using a portion of the reproduced ROM data when the RAM data is reproduced in the decrypting device 156.

For example, the encoder 301 is constituted such that a signal corresponding to one (1) bit is taken out from the ROM signal and is outputted together with the RAM signal as RAM information and this is recorded at an ECC (Error Check Code) portion at the end of the data portion when the RAM information is recorded. Then, when reproducing it, it is possible to execute error correction in which the ROM signal and the RAM signal are combined with each other by executing a parity check.

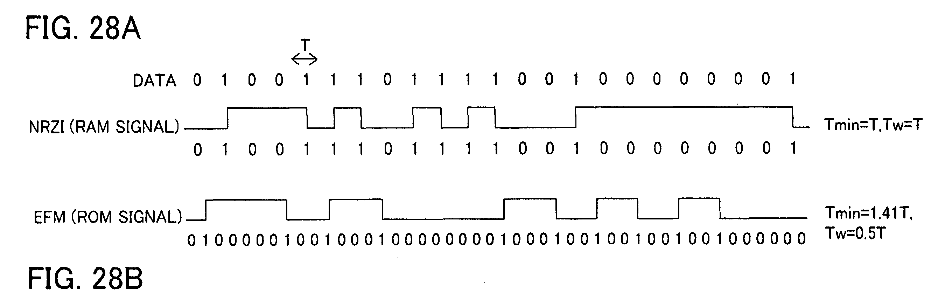

Here, recording modulation scheme in magnetic field modulation recording will be considered. As shown in Fig. 28 as an example, it is assumed that the modulation scheme used in the recording of the ROM signal is EFM (Eight to Fourteen Modulation) and the modulation scheme for the RAM data to be magneto-optical-recorded is NRZI (NonReturn-to-Zero change-on-Ones recording).

In this case, as shown in Fig. 28, representing the shortest mark as Tmin, the window margin width as Tw, and the pit length of the original data as T, Tmin and Tw equal to T for the NRZI, Tmin equals to 1.41T, and Tw equals to 0.47T for the EFM (see Fig. 28B).

A constitution with a large window margin width Tw and a long shortest mark Tmin is suitable for the RAM signal because there is also a limitation on the frequency characteristics of a magnetic field modulation writing signal. The EFM scheme having a long shortest mark Tmin is suitable for the ROM signal. Therefore, according to the invention, it is preferable to use different recording modulation schemes respectively suitable for the RAM signal and the ROM signal.

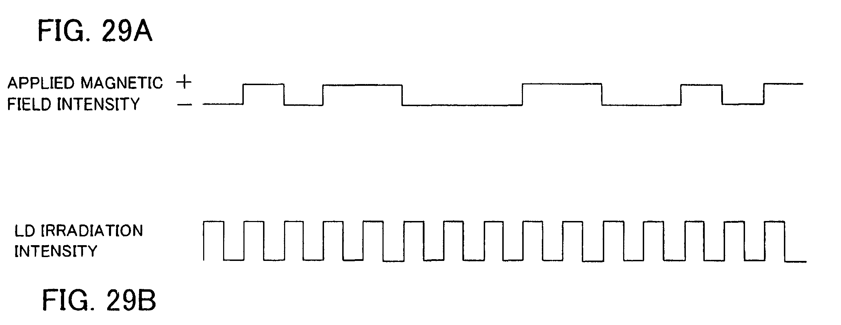

Furthermore, in the commonmagnetic fieldmodulation scheme, information is recorded by inverting magnetic fields with a constant illuminating power of a semiconductor laser diode LD. In contrast, according to the invention, as shown in Fig. 29 illustrating a magnetic field modulation scheme in which a semiconductor laser diode LD is illuminated by pulses, a semiconductor laser diode LD is illuminated by pulses (Fig. 29B) and a magnetic field applied is varied in response to a signal (Fig. 29A).

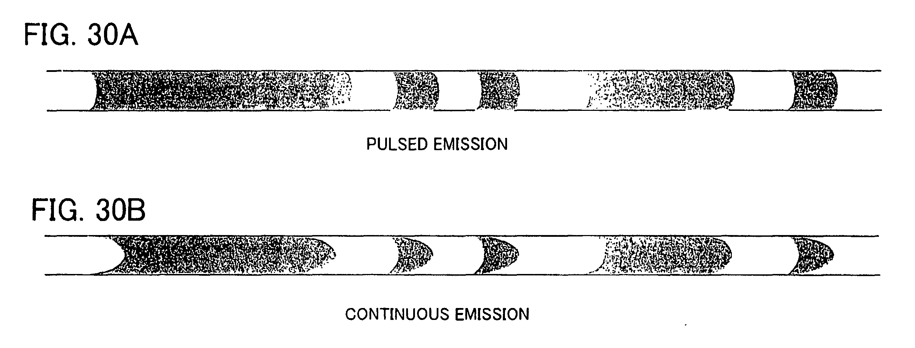

Thereby, in Fig. 30 showing the difference between the shapes of recording marks, the temperature distribution of the optical information recording medium is varied when magneto-optical recording is executed and magneto-optical recording marks as shown in Fig. 30A are formed. It can be understood that the shape of the arrow blades is eased compared to the case where recording is executed by continuous illumination of the conventional semiconductor laser diode LD (Fig. 30B). Therefore, the characteristics of the reproduced signal can be improved by the easing of the recording marks of the shapes of the arrow blades.

Referring back to Fig. 19, it is desirable that the starting address number for recording of the magneto-optical recording coincides with the block address number of the ROM information or has a constant relation of correspondence that can be easily obtained by calculation etc., tanking into account the use of the concurrent reading of the ROM information and the RAM information. Thus, clock signals are reproduced from the first ROM signal (ROM1) of the phase pit signal being the output of the adding amplifier 29 by the synchronization detection circuit 154 and the starting address number for recording is detected.

A unit comprising the magnetic head 35 and the objective lens 16 is positioned (accessed) by a seek mechanism (not shown in Fig. 23 and Fig. 25) to the detected starting address number for recording, and then recording is started.

Then, based on the clock reproduced from the above first ROM signal (ROM1), the rotation of the motor 18 is controlled by a motor driver 36 through a motor controller 159 as a portion of the seek operation.

It is possible to constitute such that the motor driver 36 or a TES actuator driver 37 is caused to execute the portion of the seeking function in a range where the seeking distance is short as the seeking mechanism.

Furthermore, since the clock for the magneto-optical recording is generated from the phase pit signal (ROM 1) as described above, this clock is utilized for the synchronization process. That is, in the main controller 15, the clock of the phase pits is reproduced by the synchronization detection circuit 154 and, as described referring to Fig. 27, the recording timing of the RAM information to be magneto-optical-recorded is adjusted by the synchronization and conversion circuit 303 (Fig. 27) of the encrypting device 151 such that the RAM information is synchronized with the clock.

By utilizing the clock of the ROM signal as described above, variation of the recording mark length caused by decentering of the disk during recording can be suppressed.

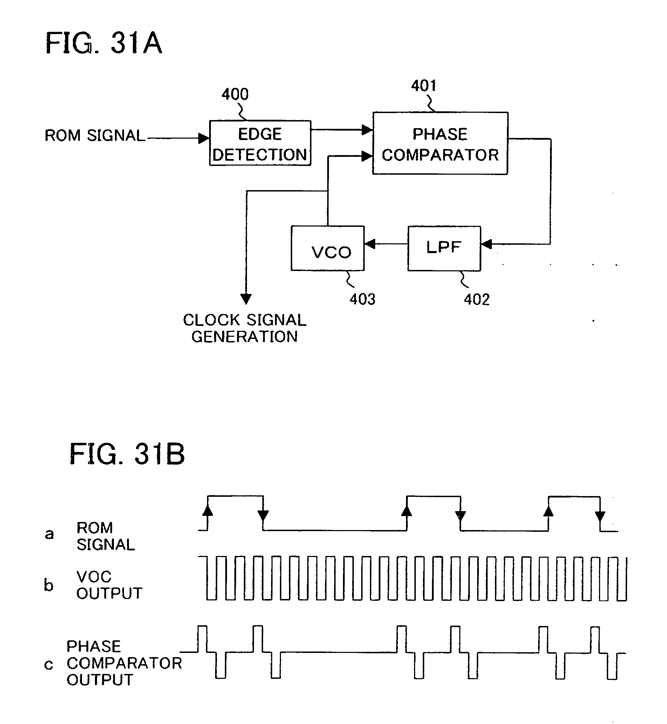

Fig. 31 shows an example of the constitution of the synchronization detection circuit 154 in the main controller 15 for reproducing the clock of the ROM signal for the above synchronization processing. Fig. 31A is a block diagram of the constitution and Fig. 31B is a diagram showing the timing of each signal. A predetermined slice level is set by an edge detection circuit 400 for the ROM signal (Fig. 31B-a) inputted into the synchronization detection circuit 154 and the edge of the ROM signal is detected. Then, a timing signal for detecting the edge is inputted into a phase comparator 401.

Furthermore, a feedback loop is constituted for the phase comparator 401, a low-pass filter 402 and a voltage controlling oscillator 403 and the phase of the pulse output from the voltage controlling oscillator 403 is adjusted. Thereby, a clock is generated.

That is, in Fig. 31B, a phase comparison output is outputted from the phase comparator 401 to the edge of the ROM signal a synchronizing with the pulse b from the voltage controlling oscillator 403. When the phase of the pulse from the voltage controlling oscillator 403 and the phase of the ROM signal are shifted from each other, the phase comparing output is shifted and the output of the low-pass filter 402 is biased to the positive or negative side. A clock synchronized with the ROM signal can be generated by applying feedback to the voltage controlling oscillator 403 utilizing the above.

Next, the operation for reproducing will be described. It has been described that the optical intensity modulation caused by the phase pit signal, i.e., the ROM signal acts as a noise for the RAM signal. Therefore, similarly to the method described above in a conventional technique, it is possible to reduce and flatten the first ROM signal (ROM1) by negatively feeding back the first ROM signal (ROM1) from the adding amplifier 29 to the semiconductor diode LD through the LD driver 31, controlling the illumination of the semiconductor laser diode LD.

In such embodiment, the cross-talk to the RAM signal being read out can be effectively suppressed. However, when the concurrent reading of the ROM and the RAM signals is executed, it is difficult to obtain the ROM signal because the ROM1 signal has been flattened by negative feedback control described as above.

Therefore, the ROM signal must be detected in another method. In the embodiment of the invention, the injected current into the semiconductor laser diode LD is negative-feedback-modulated by the first ROM signal (ROM1) during reproduction. That is, it is optical-intensity-modulated in the same way as the ROM signal.

The photo detector for APC 13 can detect this optical intensity modulation. When the MPF loop is operating, the phase pit signal can be obtained as the second ROM signal (ROM2) by turning off the APC loop.

Therefore, in the invention, in the main controller 15 shown in Fig. 25, this second ROM signal (ROM2) is clock-reproduced by the synchronization detection circuit 154, is demodulated corresponding to the EFM magnetic field modulation by the demodulator 155, and can be obtained as the ROM information. The demodulated ROM information is decrypted corresponding to the encryption by the encrypting device 151, by the decrypting device 156 and is outputted as reproduced data.

When the ROM information and the RAM information are concurrently reproduced, the rotation of the motor 18 is controlled by the motor driver 36 as a portion of the seeking operation through the motor controller 159 based on the clock reproduced from the second ROM signal (ROM2) obtained by the above synchronization detection circuit 154.

The RAM signal can be detected as the output of the differential amplifier 30 without receiving any interference from the ROM signal, by ROM signal negative feedback means including the LD driver 31 to the semiconductor laser diode LD.

In the main controller 15, the output of the differential amplifier 30 is synchronized and detected by the synchronization detection circuit 157, is demodulated corresponding to the NRZI modulation by the demodulator 158, is decrypted by the decrypting device 156, and is outputted as the RAM signal.

Here, similarly to the recording, an embedded clock utilizing the second ROM signal (ROM2) detected by the synchronization detection circuit 154 may be used as the reproduced clock. Thereby, a signal detection window automatically varies with the shift from the defined linear velocity caused by variation of rotation or decentering of the track. Therefore, stable reproducing is possible.

The main controller 15 in Fig. 25 has a delay circuit 159. As described above, this delay circuit 159 is for adjusting the timing corresponding to the process in which the timing for recording the RAM information is lightly shifted when the RAM information is recorded on the ROM information, in order to reduce the influence of the polarization noise generated by the edge of the phase pit that is the ROM information when the RAM signal is reproduced.

When only the ROM signal is reproduced, since there is no need to consider the influence given to the RAM signal, the second RAM signal (RAM2) is used as the LD feedback signal similarly to recording and the first ROM signal (ROM1) is demodulated and reproduced as the ROM information.

In the embodiment of the invention, CLV (Constant Linear Velocity) scheme in which the linear velocity for both of recording and reproducing is constant for whole the disk surface is employed, and the rotation of the motor 18 is controlled by sending the order from the motor controller 159 corresponding to the ROM signal, to the motor driver 36. However, the invention is not limited to this and the same effect can also be obtained when CAV, ZCAV or ACLV is employed.

As described above, in the embodiment of the invention, in any case of recording, reproducing (the ROM reproducing and concurrent reproducing of the ROM and the RAM), the generation of the clock and the motor driver 36 can be controlled by the ROM data, that is, the phase pit information.

Especially, since reproduction is not executed with self-clock during RAM reproduction, and since the clock for reproduction is generated from the ROM signal that is the phase pit information to be the contents (music, text or image) used by a user even when the quality of the RAM signal is low, the clock for reproducing is stable regardless of the quality of the RAM signal.

Here, the optical information record medium of the invention capable of the concurrent reproducing of the ROM and RAM information will be considered in terms of its advantage, especially of security and recording capacity.

In the constitution of the main controller 15 shown in Fig. 25, the main controller 15 has the encrypting circuit 151 and the decrypting circuit 156. Thereby, in the case where the ROM information of the optical information recording medium of the invention is confidential information (the first digitized image of the original image, a private document or an official document), security of the data can be secured easily at a low cost as a hardware constitution by utilizing the optical information recording medium of the invention and a storage apparatus shown in Fig. 23.

That is, non-rewritable important information is recorded as phase pits as ROM information. Furthermore, RAM information is converted into encrypted data such as Triple Des by the encrypting device 151 according to the above ROM information, onto a RAM portion provided to the physically same area on which the ROM information has been recorded. Then, this generated encrypted data are magneto-optically recorded.

Thereby, it is possible to make a concurrent access to the important ROM data and its encrypted data so that the size of one (1) optical information record medium can be utilized as much as possible.

Furthermore, when the encrypted information is utilized as an electronic watermark, whether the information on the ROM portion is certified information or not can be instantly determined.

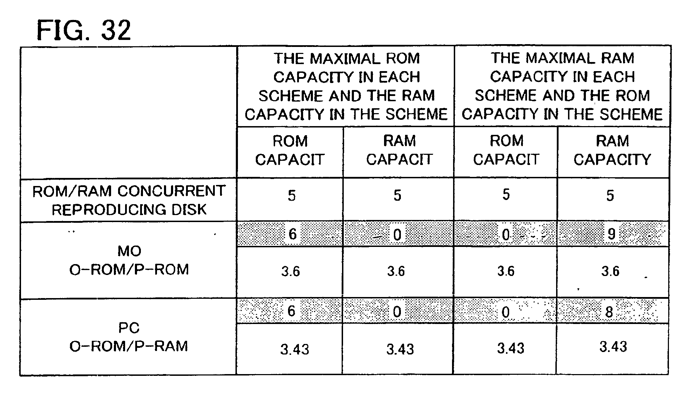

Fig. 32 shows a table in which the ROM recording capacity and the RAM recording capacity, as 10 (ten), of the optical information recording medium of the invention is compared with other disk media in terms of specifications.

As for single ROM disk medium and single RAM disk medium for recording the ROM information, when only the ROM information is recorded, it is possible to increase the capacity by approximately 10% for the ROM capacity compared with the optical information recording medium of the invention by employing the state-of-the-art technique. On the other hand, when only the RAM information is recorded, it is possible to increase the capacity by approximately 80% for the RAM capacity compared with the optical information record medium of the invention.

However, in Fig. 32, it is shown that the optical information record medium of the invention is remarkably advantageous in a format supporting both of the ROM and RAM information. Furthermore, when a phase change record medium is used for the RAM recording area in P-ROM, it is natural that it has the same capacity for the ROM information. However, for the RAM information, the recording capacity decreases approximately by 10% compared with the magneto-optical base and there is no advantage.

For the optical information record medium of the invention, the recording capacity for the ROM information and RAM information depend on the size of the medium. However, as to the ROM capacity and the RAM capacity, the RAM capacity can be set at the same capacity as the ROM capacity according the maximal ROM capacity for the size of the medium.

The medium and the storage apparatus of the invention have a different medium structure and a different storage apparatus structure from the P-ROM and O-ROM of the existing magneto-optical media (MO) conforming to the ISO standard and the ROM capacity and the RAM capacity do not invade each other.

According to the ISO standard, it is meant that the ROM information and the RAM information can not correspond to each other completely one by one in response to the necessary ROM capacity. The essential characteristic of the optical information recording medium of the invention is that, when a RAM capacity is made equal to the maximum ROM capacity for a medium size, improvement of approximately 40% can be realized compared to the P-ROM conforming to the ISO standard.

In other words, it means that another embodiment can be further added to the embodiments of the invention. Because, since effect of the improvement of 80% for the recording capacity is realized for the RAM recording density using the state-of-the-art technique for the media'only for RAM, in addition to the first embodiment, a new application can be realized by providing a RAM area which does not have ROM information capable of being concurrently reproduced, in an independent form.

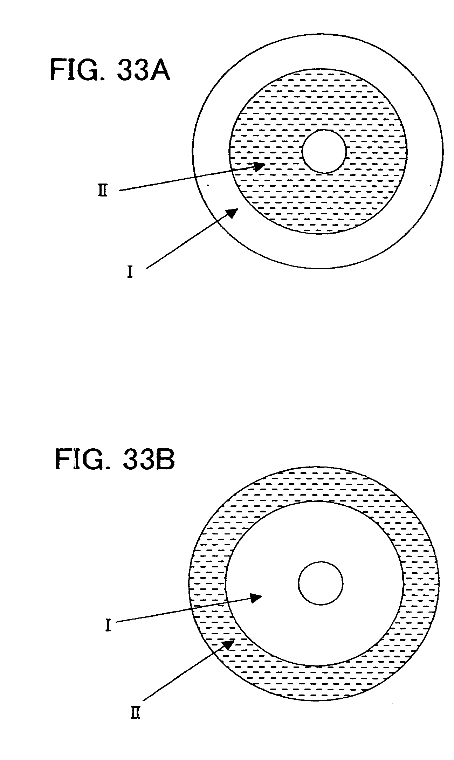

Fig. 33 shows a plan view of another embodiment of the optical information record medium of the invention compared to a conventional P-ROM medium. This has a structure further provided with an independent RAM area I to a concurrent ROM-RAM area II in the optical information record medium of the invention described above.

The area distribution of the independent RAM area I and the concurrent ROM-RAM area II can be either of that the independent RAM area I is provided on the outer circumference side and the concurrent ROM-RAM area II is provided on the inner circumference side as shown in Fig. 33A, or that the independent RAM area I is provided on the inner circumference side and the concurrent ROM-RAM area II is provided on the outer circumference side as shown in Fig. 33B.

Adiskmediumhaving its data areas divided into areas of the independent RAM area I and the ROM-RAM area II can be formed as follows. That is, a disk polycarbonate substrate A is formed, that has embosses to be the phase pits at the positions as described above referring to Fig. 2 such as those corresponding to track groove (see Figs. 2 and 4) for the RAM area, the disk controlling information area (an area where information specific to the disk medium and specific information such as address are recorded; see Figs. 2 and 8) and the concurrent ROM-RAM area II. Then, on one (1) side or both sides of the disk, a dielectric film B, a magneto-optical recording film C, a dielectric film D, an AI film E and a protective layer F are formed one after another.

Therefore, the portion corresponding to the area in the magneto-optical recording film superimposing on the embosses corresponding to the ROM signal is defined as the concurrent ROM-RAM area II and a data area not superimposing on the ROM signal is defined as the RAM area I.

According to these definitions, by recording the information specific to the diskmedium in the disk control information area, the position of the ROM area on the disk where the ROM signal is recorded can be determined by the storage apparatus and the same position as its ROM area can be determined as the concurrent ROM-RAM area II and the remaining data area having no ROM signal as the independent RAM area I for recording the RAM signal.

Furthermore, depending on the position of the ROM area that has been formed earlier on the substrate A, the area distribution of the RAM area I for storing only the RAM signal and the concurrent ROM-RAM area II is that the independent RAM area I is disposed on the outer circumference side as shown in Fig. 33A or is disposed on the inner circumference side as shown in Fig. 33B.

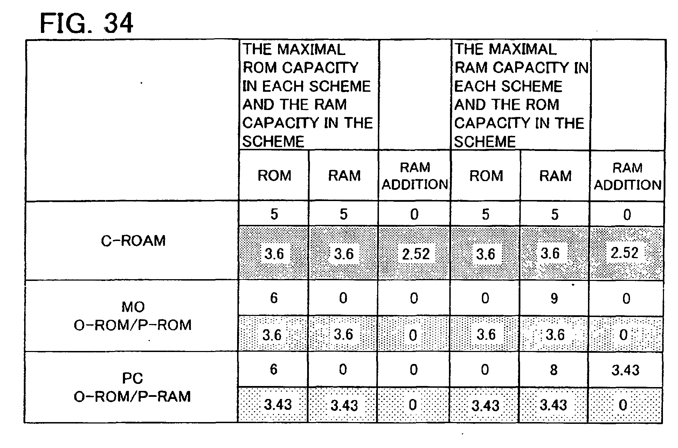

Fig. 34 shows a comparison table of the ROM recording capacity and the RAM recording capacity as 10 (ten) of the optical information record medium of the expanded sample shown in Fig. 33 provided being added with the area I for only the RAM of the invention with the specifications of other disk media.

For example, for this medium size conforming to the P-ROM standard, when each of the ROM and the RAM has a recording capacity equal to each other, they are set at 3.6 respectively. On the other hand, for the optical information recording medium of the invention, even when the ROM/RAM concurrent reproducing/recording capacity is set at 3.6 respectively, an independent RAM area corresponding to 2.52 can be set for the same medium size and it means that this disk is more advantageous by as much as 35% for the total capacity.

Furthermore, as a method for utilizing the ROM area and the RAM area, data information that can be captured as one (1) unit (unit data information) is divided into a ROM signal and a RAM signal, and the former can be recorded with phase pits on the ROM area and the latter can be magnetically recorded on the magneto-optical recording film. In this case, it is desirable to separate more important information as a ROM signal. The unit data information may be, for example, one (1) or more sectors, one (1) image frame, one (1) music frame.

Furthermore, further higher density can be facilitated for the RAM area when a larger capacity recording/reproducing technique, a blue color laser, a ultra definition scheme or near field scheme is employed.

INDUSTRIAL APPLICABILITY

As set forth hereinabove referring to the drawings, according to the optical information recording medium of the invention, by defining the degree of modulation of the pit portion on a concurrent ROM-RAM disk to a flat portion, the signal characteristic of the magneto-optical signal can be improved and correct reading of RAM information is possible. Therefore, according to the optical information recording medium of the invention, ROM-RAM concurrent reproducing is possible and a medium for ROM-RAM concurrent recording and reproducing corresponding to specific uses can be provided. Thereby, improvement of the security of data and improvement of protection of copyrights in information transmission are made easy.

**Claims**

1. An optical information recording medium comprising:

a substrate having a ROM area in which phase pits to be a ROM signal are formed; and a magneto-optical recording film for recording a RAM signal, formed on an area corresponding to the ROM area of the substrate, wherein the degree of modulation of the phase pits in at least a user area of the ROM area is 10-37%.

2. The optical information recording medium according to claim 1, wherein the degree of modulation of the user area further is within the range of 15-25%.

3. The optical information recording medium according to claim 1, wherein the optical depth of the phase pits is approximately $\lambda/8$-$\lambda/10$ (where $\lambda$ is the laser wavelength used for recording or reproducing).

4. The optical information recording medium according to claim 2, wherein the pit width of the phase pits is 18-24% of the track pitch width.

5. The optical information recording medium according to claim 2, wherein there are an area for storing only RAM signals on the substrate, which is different from the ROM area where phase pits are formed to be the ROM signal.

6. The optical information recording medium according to claim 5, wherein the area for storing only RAM signals is capable of land group recording.

7. The optical information recording medium according to claim 5, wherein the substrate has a disk shape, and wherein the magneto-optical recording film for storing only the RAM signal is disposed in a concentric or spiral manner with respect to the ROM area and inward or outward of the ROM area.

8. The optical information recording medium according to claim 2, wherein different recording modulation schemes are used respectively for the ROM signal recorded in the ROM area and the RAM signal recorded in the RAM area.

9. The optical information recording medium according to claim 2, wherein a magnetic field modulation scheme is used for the recording of the RAM signal.

10. The optical information recording medium according to claim 1, wherein a guide groove is engraved on the substrate, and wherein the amount of detected light from the phase pits is 70% or more of the level of the detected light only from the guide groove.

**11.** An optical information recording medium comprising:

a substrate having a ROM area in which phase pits to be a ROM signal are formed; and a magneto-optical recording film for recording a RAM signal, formed on the ROM area of the substrate, wherein an error correction signal generated by combining ROM signals and RAM signals is recorded as the RAM signal on the magneto-optical recording film.

**12.** An optical information recording medium comprising:

a substrate having a ROM area in which phase pits to be a ROM signal are formed; and a magneto-optical recording film for recording RAM signals, formed on an area corresponding to the ROM area of the substrate, wherein writing is prohibited by a user on a portion of the magneto-optical recording film for storing the RAM signal.

**13.** The optical information recording medium according to claim 2, wherein the address of writing-in blocks of the magneto-optical recording film for storing the RAM signal coincides with or has a certain relation with the block address of the ROM portion.

**14.** The optical information recording medium according to claim 2, wherein unit data information is divided into ROM signals and RAM signals, each of them being respectively recorded on the ROM area and the magneto-optical recording film.

**15.** An optical information recording medium having a disk shape and capable of concurrent ROM/RAM reproduction, comprising:

a substrate having a ROM area in which phase pits to be a ROM signal are formed; and a magneto-optical recording film for recording RAM signals, formed on the substrate, wherein the repetition phase pits of a single frequency are formed on one (1) or more circumferences of the disk.

**16.** The optical information recording medium according to claim 15, wherein, on an area of the ROM where the mark length and spacing are recorded repeatedly at a single cycle, a magneto-optical mark of single repetition at a frequency different from that of the ROM is recorded as a RAM signal, and wherein

representing the read-out output level of the magneto-optical mark as c [dB] and the leak output level of the ROM signal as d [dB],

$$15 < c-d < 35.$$

**17.** An optical information recording medium comprising:

a substrate having a ROM area in which phase pits to be ROM signals are formed; and a magneto-optical recording film for recording RAM signals, formed on an area corresponding to the ROM area of the substrate, wherein representing as "e" the reproducing amplitude of magneto-optical recording signals when magneto-optical recording marks are recorded as RAM signals in an area where the marks are recorded in random lengths in the ROM area, and representing as "f" the leak amplitude of the ROM signal into the magneto-optical recording signal during reproduction of magneto-optical recording signal when the magneto-optical recording marks are deleted,

$$16 < 100 \times f/e < 34 \ [\%].$$

**18.** The optical information recording medium according to claim 16 or 17, wherein the optical depth of the phase pits is approximately $\lambda/8$-$\lambda/14$ and, preferably, $\lambda/9$-$\lambda/13$.

**19.** The optical information recording medium according to claim 16 or 17, wherein the phase pit width is within a range of 18-50% of the beam diameter.

**20.** The optical information recording medium according to claim 1, 16 or 17, wherein, at least in a user area, the edge portion of the magneto-optical recording marks to be the RAM signal and the phase pit portion to be the ROM signal are recorded so as not to overlie each other.

# FIG. 1

# FIG. 2

# FIG. 3

F

E

D

C

B

A

GROOVE 4          LAND 5

# FIG. 4

# FIG. 5

FIG. 6

PIT WIDTH

Pw

PIT DEPTH

Pd

TRACK PITCH

Tp

# FIG. 7

OBJECTIVE LENS NA 0.45 $\lambda$ = 780nm, TRACK PITCH 1.6 $\mu$ m

EP 1 467 362 A1

# FIG. 8

| PAHSE<br>PIT MODULATION | 12% | 15% | 20% | 25% | 30% |
|---|---|---|---|---|---|
| ROM<br>JITTER | 18ns | 20ns | 25ns | 32ns | 40ns |
| RAM<br>JITTER | 40ns | 32ns | 28ns | 25ns | 23ns |

# FIG. 9

ROM PLAYBACK SIGNAL

SPACE PORTION REFLECTION LEVEL

MARK PORTION REFLECTION LEVEL

VOLTAGE V

a

b

GND LEVEL

MODULATION  $100 \times b / a$ (%)

# FIG. 10

## JITTER DEPENDENCE ON MODULATION

—□— ROM JITTERING
—□— RAM JITTERING

JITTERING / MODULATION

# FIG. 11A

PHASE PITS IN A REPEATED PATTERN
OF SINGLE FREQUENCY

PHASE PIT          MO MARK

MEASUREMENT BY
SPECTRAL ANALYZER

# FIG. 11B

OUTPUT
(dBm)

c

c-d

LEAK OUTPUT OF
THE PHASE PIT
SIGNAL d

FREQUENCY (MHz)          HIGHER
FREQUENCY

MO REPRODUCING
OUTPUT c

# FIG. 12

MEASUREMENT OF THE ROM SIGNAL LEAK

—□— ROM JITTERING
—□— ROM JITTERING

JITTERING

18.0%
16.0%
14.0%
12.0%
10.0%
8.0%
6.0%
4.0%
2.0%
0.0%

5.0    10.0    15.0    20.0    25.0    30.0    35.0    40.0

c-d (dB)

## FIG. 13A

USER AREA

MO RECORDED STATE

MO ERASED STATE

OSCILLOSCOPE MEASUREMENT OF MO RECORDING

VOLTAGE [V]

e

TIME

## FIG. 13C

$100 \times f/e(\%)$

OSCILLOSCOPE MEASUREMENT OF MO ERASING

VOLTAGE [V]

f

TIME

## FIG. 13B

## FIG. 14

MEASUREMENT OF THE ROM SIGNAL LEAK

JITTERING

- ROM JITTERING
- RAM JITTERING

f/e(%)

## FIG. 15

### DEPENDENCE OF JITTERING ON THE PIT DEPTH

## FIG. 16

### JITTERING FOR THE PIT WIDTH/BEAM DIAMETER

## FIG. 17

## FIG. 18

FIG. 19

OBL OBJECTIVE LENS

DL DETECTION LIGHT

$\theta$

SB SUBSTITUTE
(REFRANCTION FACTOR n)

$NA = \sin\theta$

P PIT OR GUIDE GROOVE

BEAM WAIST w

EP 1 467 362 A1

# FIG. 20

DL DETECTION LIGHT
(WAVELENGTH $\lambda$)

OBL

PIT REFLECTED
LIGHT INTENSITY I

INTENSITY OF LAND
REFLECTED LIGHT 2

INTENSITY OF LAND
REFLECTED LIGHT 1 (I/2)

I/2

PIT DEPTH d

PIT WIDTH A

LI

PI

SUBSTRATE
REFRACTION
FACTOR n

LAND WIDTH B

TRACK PITCH Tp

EP 1 467 362 A1

# FIG. 21

DT
TRACK DETECTION DETECTOR

DL
DETECTION LIGHT (WAVELENGTH $\lambda$)

E   F

OBL

PIT REFLECTED LIGHT I

PIT REFLECTED LIGHT INTENSITY I

STANDARD PUSH-PULL SIGNAL

$$DPP \approx \frac{4AB\sin(\Delta)}{(A+B)^2}$$ —— EQUATION 3

WHERE $\Delta = \frac{4\pi d n}{\lambda}$

PIT DEPTH d

PIT WIDTH A

LI   PI

SUBSTRATE REFRACTION FACTOR n

LAND WIDTH B

EP 1 467 362 A1

FIG. 22

# FIG. 23

EP 1 467 362 A1

FIG. 24

# FIG. 25

FES

FES ON  LAND/GROOVE SELECTOR

TES ON

TES

SERVO CONTROLLER  ~153

LD CONTROLLER  ~150

ROM SELECTOR

SW1

ROM1

LPF  ~160  ROM SELECTOR  SYNCHRONOUS DETECTION  ~154

SW2

DEMODULATOR  155

MOTOR CONTROLLER  ~159

ROM2

DELAY CIRCUIT  159

DECRYPTER  156

RAM

SYNCHRONOUS DETECTION  157  DEMODULATOR  158

DATA I/O (IN)

ENCRYPTER  ~151

MAGNETIC HEAD CONTROLLER  ~152

15

LD CONT

SERVO CONT

MOTOR CONT

DATA I/O (OUT)

MAG CONT

EP 1 467 362 A1

34

FIG. 26

| | LD FEEDBACK SIGNAL | ROM DETECTION | RAM DETECTION |
|---|---|---|---|
| ROM & RAM PLAYBACK | ROM1 | ROM2 | RAM |
| ROM PLAYBACK ONLY | ROM2 | ROM1 | — |
| WRITE | ROM2 | ROM1 | — |

## FIG. 27

## FIG. 28A

DATA 0 1 0 0 1 1 1 0 1 1 1 1 0 0 1 0 0 0 0 0 0 0 1

NRZI (RAM SIGNAL)

0 1 0 0 1 1 1 0 1 1 1 1 0 0 1 0 0 0 0 0 0 0 1

Tmin=T,Tw=T

EFM (ROM SIGNAL)

0 1 0 0 0 0 0 1 0 0 1 0 0 0 1 0 0 0 0 0 0 0 0 1 0 0 0 1 0 0 1 0 0 1 0 0 1 0 0 1 0 0 0 0 0 0

Tmin=1.41T,
Tw=0.5T

## FIG. 28B

## FIG. 29A

APPLIED MAGNETIC  $+$
FIELD INTENSITY  $-$

LD IRRADIATION
INTENSITY

## FIG. 29B

EP 1 467 362 A1

FIG. 30A

PULSED EMISSION

FIG. 30B

CONTINUOUS EMISSION

# FIG. 31A

400

ROM SIGNAL ⟶ | EDGE DETECTION | ⟶

401

| PHASE COMPARATOR |

| VCO | ⟵ | LPF |

403          402

CLOCK SIGNAL GENERATION

# FIG. 31B

a  ROM SIGNAL

b  VOC OUTPUT

c  PHASE COMPARATOR OUTPUT

# FIG. 32

| | THE MAXIMAL ROM CAPACITY IN EACH SCHEME AND THE RAM CAPACITY IN THE SCHEME | | THE MAXIMAL RAM CAPACITY IN EACH SCHEME AND THE ROM CAPACITY IN THE SCHEME | |
|---|---|---|---|---|
| | ROM CAPACIT | RAM CAPACIT | ROM CAPACIT | RAM CAPACITY |
| ROM/RAM CONCURRENT REPRODUCING DISK | 5 | 5 | 5 | 5 |
| MO O–ROM/P–ROM | 6 | 0 | 0 | 9 |
| | 3.6 | 3.6 | 3.6 | 3.6 |
| PC O–ROM/P–RAM | 6 | 0 | 0 | 8 |
| | 3.43 | 3.43 | 3.43 | 3.43 |

FIG. 33A

FIG. 33B

## FIG. 34

| | THE MAXIMAL ROM CAPACITY IN EACH SCHEME AND THE RAM CAPACITY IN THE SCHEME | | | THE MAXIMAL RAM CAPACITY IN EACH SCHEME AND THE ROM CAPACITY IN THE SCHEME | | |
|---|---|---|---|---|---|---|
| | ROM | RAM | RAM ADDITION | ROM | RAM | RAM ADDITION |
| C–ROAM | 5 | 5 | 0 | 5 | 5 | 0 |
| | 3.6 | 3.6 | 2.52 | 3.6 | 3.6 | 2.52 |
| MO O–ROM/P–ROM | 6 | 0 | 0 | 0 | 9 | 0 |
| | 3.6 | 3.6 | 0 | 3.6 | 3.6 | 0 |
| PC O–ROM/P–RAM | 6 | 0 | 0 | 0 | 8 | 3.43 |
| | 3.43 | 3.43 | 0 | 3.43 | 3.43 | 0 |

## INTERNATIONAL SEARCH REPORT

| International application No. |
| --- |
| PCT/JP03/00145 |

**A. CLASSIFICATION OF SUBJECT MATTER**
Int.Cl⁷ G11B11/105

According to International Patent Classification (IPC) or to both national classification and IPC

**B. FIELDS SEARCHED**

Minimum documentation searched (classification system followed by classification symbols)
Int.Cl⁷ G11B11/105, G11B7/00-7/0065

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 9-505923 A (Deutsche Thomson Brandt GmbH.), 10 June, 1997 (10.06.97), Full text; all drawings & WO 95/15557 A1  & EP 731970 A & US 5812519 A1 | 1-10,13,14, 20 |
| A | JP 7-57264 A (Fujitsu General Ltd.), 03 March, 1995 (03.03.95), Full text; all drawings (Family: none) | 1-10,13,14, 20 |
| P,A | JP 2002-342944 A (Ricoh Co., Ltd.), 29 November, 2002 (29.11.02), Full text; all drawings (Family: none) | 1,2 |

| [x] Further documents are listed in the continuation of Box C. | [ ] See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17 April, 2003 (17.04.03) | 30 April, 2003 (30.04.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| International application No. |
|---|
| PCT/JP03/00145 |

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2002-175649 A  (Hitachi Maxell, Ltd.),<br>21 June, 2002 (21.06.02),<br>Claim 1<br>(Family: none) | 1,2 |
| A | WO 00/07182 A1  (Matsushita Electric Industrial Co., Ltd.),<br>10 February, 2000 (10.02.00),<br>Description, page 5, lines 12 to 14<br>& EP 1102248 A1 | 1,2 |
| A | JP 9-120586 A  (Mitsui Toatsu Chemicals, Inc.),<br>06 May, 1997 (06.05.97),<br>Full text; all drawings<br>& EP 762392 A2        & US 5696758 A1<br>& DE 69616919 T | 1-10 |

Form PCT/ISA/210 (continuation of second sheet) (July 1998)

## INTERNATIONAL SEARCH REPORT

| International application No. |
|---|
| PCT/JP03/00145 |

---

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

---

**Box II    Observations where unity of invention is lacking (Continuation of item 3 of first sheet)**

This International Searching Authority found multiple inventions in this international application, as follows:
The technical feature common to claims 1-20 relates to a magneto-optical recording medium including a substrate having an ROM area where a phase pit to become an ROM signal is formed and a magneto-optical recording film formed at an area corresponding to the ROM area of the substrate for recording an RAM signal.  As described in the Specification of the present application, this technical feature is a conventionally known feature and cannot be a special technical feature.  The technical feature common to the inventions of claims 1-10, 13, 14, 20 relates to that the phase pit in at least a user area of the ROM area has a modulation degree of 10 to 37%.
(continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-10, 13, 14, 20

**Remark on Protest**    ☐    The additional search fees were accompanied by the applicant's protest.

   ☐    No protest accompanied the payment of additional search fees.

---

Form PCT/ISA/210 (continuation of first sheet (1)) (July 1998)

## INTERNATIONAL SEARCH REPORT

| International application No. |
| --- |
| PCT/JP03/00145 |

Continuation of Box No.II of continuation of first sheet(1)

The invention of claim 11 relates to that an error correction signal generated by combining an ROM signal and an RAM signal is recorded as the RAM signal on the magneto-optical recording medium. The invention of claim 12 relates to that write by a user is inhibited for a part of the magneto-optical recording film for storing an RAM signal. The inventions of claims 15-16 relate to that a single-frequency repeated phase pit is formed on one or more circumferences of the disc. The inventions of claims 17-19 relate to that a reproduction amplitude of an magneto-optical recording signal when a magneto-optical recording mark is being recorded is in a predetermined relationship with a leakage amplitude of the ROM signal into the magneto-optical recording signal when the magneto0optical recording mark is being erased.

Accordingly, claims 1-20 are divided into five groups of inventions and do not satisfy the requirement of unity of invention.

Form PCT/ISA/210 (extra sheet) (July 1998)